# EUROPEAN PATENT SPECIFICATION

(11) **EP 1 801 832 B1**
(45) Date of publication and mention of the grant of the patent: **20.08.2008**
(21) Application number: 06026423.1
(22) Date of filing: 20.12.2006
(51) Int. Cl.: H01H 13/83, H01H 9/52

(54) **Illumination type key sheet**
Beleuchtete Folientastatur
Clavier à couches illuminé

(30) Priority: 26.12.2005 JP 2005373125
(43) Date of publication of application: 27.06.2007
(73) Proprietor: POLYMATECH CO., LTD., Tokyo (JP)
(72) Inventor: Koyano, Shigeru, 10-5, Tabata 5-chome Kita-ku (JP); Nakanishi, Yutaka, 10-5, Tabata 5-chome Kita-ku (JP)
(74) Representative: Schmid, Wolfgang

(56) References cited:
- EP-A2- 1 265 261
- EP-A2- 1 388 767
- JP-A- 2000 311 050
- US-A- 5 764 483

## Description

### BACKGROUND OF THE INVENTION

### 1. Field of the Invention

The present invention relates to a pushbutton switch key sheet for use in various electronic apparatuses, such as a portable information terminal, including a mobile phone and PDA, a vehicle-mounted AV apparatus, a remote controller, and a personal computer, and particularly to an illumination type key sheet according to the preamble of claim 1.

### 2. Description of the Related Art

Many pushbutton switches for various electronic apparatuses, such as mobile phones and AV apparatuses, have a structure in which, for an improvement in operability in a dark place, the operating portion having display elements, such as characters and symbols, is illuminated by a light source called back light. For example, in JP 2004-63449 A, JP 2004-193060 A, and JP 2005-85582 A, an EL member is used as an example of such a light source. An EL member is a thin, planar light emitting body, so it helps to achieve a reduction in apparatus thickness and size and, unlike an LED, involves no unevenness in the illumination of the key sheet.

In EP 1 265 261 A2 there is described a keypad for a mobile phone which includes a circuit board having a fixed contact point; a dome switch disposed on the circuit board, a base pad member having a projection for pressing the dome switch to generate signal, and an upper pad member having a key top. The upper pad member is integrally formed with the base pad member and an electroluminescent (EL) element is disposed surface-contacting between the base pad member and the upper pad member.

US 5,764,483 describes a cooling unit for electronic equipment, in which a heat generating electronic component is mounted on the circuit board and is connected with a heat dissipation section through a thermal transport device having a flexible structure.

In electronic apparatuses, whose function is becoming more and more sophisticated, the mounted elements, such as semiconductor devices and electronic components, which are mounted on the board at high density, generate heat. In particular, with the improvement in their processing capacity, semiconductor devices have come to generate a markedly increased amount of heat, with the result that heat is allowed to be locally stored around the mounted elements, adversely affecting the EL member as the light source. That is, when an EL member is heated, the half life of its light emitting body is reduced as compared with the intrinsic half life thereof, so the light emission luminance of the EL member is reduced at a rate higher than that of ordinary EL members. Thus, when an EL member is locally heated, the light emission luminance of the heated portion is reduced as compared with that of the portion around the heated portion, so there is a fear of unevenness in luminance being generated in the light emission surface, which will seriously impair the product value of the EL member.

### SUMMARY OF THE INVENTION

The present invention has been made in view of the above-mentioned problem in the prior art. It is accordingly an object of the present invention to provide a technique which helps to efficiently diffuse the local heat generated by the mounted elements on the board and which makes the EL member relatively free from generation of unevenness in luminance.

To solve the above-mentioned problem and attain the above-mentioned object, the present invention provides an illumination type key sheet according to claim 1.

In the present invention, there are provided an EL member, and a sheet-like heat diffusion member promoting heat diffusion in the surface direction upon receiving heat generated by electronic components. Thus, due to the heat diffusion member, it is possible to efficiently diffuse the local heat generated by the mounted elements of the board in the surface direction of the heat diffusion member. Thus, it is possible to prevent local heating of the EL member, and to make the EL member relatively free from generation of unevenness in luminance.

In the key sheet of the present invention, the heat diffusion member is provided on the side of the EL member opposed to the board. That is, the sheet-like heat diffusion member is between the EL member and the mounted elements of the board, and diffuses local heat generated by the mounted elements in the surface direction of the heat diffusion member. Thus, it is possible to prevent local heating of the EL member. As a result, it is possible to make the EL member relatively free from generation of unevenness in luminance. Two cases are possible for providing the heat diffusion member on the side opposed to the board: a case in which the heat diffusion member is in intimate contact with the surface of the EL member opposed to the board, and a case in which they are spaced apart from each other, with another member being provided therebetween. In the former case, tautness is imparted to the EL member, making it relatively free from warpage. In the latter case, it is possible to make the EL member substantially free from reception of the heat from the mounted elements.

In the key sheet of the present invention, through-holes extending in the thickness direction are provided in the portions of the heat diffusion member corresponding to the depressing operation portions. Thus, when depression is effected on the depressing operation portions, input is effected through the EL member without depressing the heat diffusion member, so it is possible to perform input operation with small depression load.

In the key sheet of the present invention, the heat diffusion member and the EL member constitute the same layer. Thus, as compared with the structure in which the heat diffusion member and the EL member are stacked together, it is possible to achieve a reduction in the thickness of the key sheet.

In the key sheet of the present invention, there is provided an insulating base sheet on the side of the heat diffusion member opposed to the circuit board. Thus, even when the heat diffusion member is electrically conductive, it is not brought into direct contact with the wiring of the board, making it possible to prevent short-circuiting of the circuit.

Further, to achieve the above-mentioned object, the present invention provides an illumination type key sheet equipped with a heat diffusion member as described below.

In the illumination type key sheet of the first aspect of the present invention, the heat diffusion member is a rubber-like elastic member in which a heat conductive filler is mixed. The rubber-like elastic member is flexible and involves small deformation stress, so it helps to mitigate the impairment in operational feel at the time of input operation. Further, since it can be molded into various configurations in a mold, it can be used as a base sheet. Thus, there is no need to prepare a separate member for heat diffusion, making it possible to achieve a reduction in the thickness of the illumination type key sheet. It is also possible to orient the heat conductive filler by a high magnetic field, thereby making the heat conductivity of the EL member higher in the surface direction than in the thickness direction. As such a heat conductive filler, it is possible to use at least one of the following substances: carbon material, metal nitride, metal oxide, metal carbide, and metal hydroxide.

In the illumination type key sheet of the second aspect of the present invention, the heat diffusion member is a thin metal plate integrally provided on the EL member. Since a thin metal plate is thin and has high mechanical strength, it helps to achieve an enhancement in rigidity. Thus, the key sheet can be easily incorporated into the electronic apparatus without involving any warpage of the EL member, and the key sheet mounted can be made relatively free from deflection. Further, the heat diffusion member can be made thin, thereby achieving a reduction in the thickness of the illumination type key sheet.

In the illumination type key sheet of the third aspect of the present invention, the heat diffusion member is a graphite sheet. As compared with other materials, a graphite sheet exhibits higher heat conductivity and allows efficient heat diffusion. Further, since the graphite sheet is lightweight, it can meet the requirement for a reduction in the weight of a portable electronic apparatus.

In the illumination type key sheet of the fourth aspect of the present invention, the heat diffusion member is a laminate composed of a thin metal plate and a graphite sheet. Due to the thin metal plate, it is possible to suppress breakage or chipping of the graphite sheet, which is fragile, thus compensating for the low physical strength of the graphite sheet. This construction can be used in both cases where the thin metal plate and the graphite sheet are directly stacked together with nothing placed therebetween, and where they are stacked together indirectly, with an adhesive layer, etc. being placed therebetween.

The laminate composed of the thin metal plate and the graphite sheet may be a laminate in which the thin metal plate is situated on the circuit board side. That is, it may be a laminate in which the thin metal plate is situated on the side nearer to the circuit board and in which the graphite sheet is situated on the side farther from the circuit board. In other words, it may be a laminate in which the thin metal plate is situated on the back surface side of the laminate. Due to the laminate structure in which the thin metal plate is situated on the circuit board side, it is possible to achieve an enhancement in heat diffusion efficiency as compared with the case in which the graphite sheet is situated on the circuit board side.

Further, to achieve the above-mentioned object, the present invention provides an illumination type key sheet having a depressing operation portion as described below.

In the key sheet of the first aspect of the present invention, the depressing operation portion is a keytop formed of a translucent resin. Thus, when the keytop is exposed through an operation opening formed in a casing of the electronic apparatus, it is easy for the operator to find the operating position, making it possible to perform input operation correctly through depression of the keytop. Further, when the keytop is depressed, the portion of the EL member corresponding to the fixation surface of the keytop is not expanded or bent, so no breakage occurs in this portion, thereby realizing a long-life illumination.

In the key sheet of the second aspect of the present invention, the depressing operation portion is a translucent surface sheet. Thus, the depressing operation portion is thin, making it possible to achieve a reduction in the thickness of the illumination key sheet. For example, by forming the surface sheet as a resin film or a thin rubber sheet on which display elements, such as characters, figures, symbols, or colors, are formed by printing, it is possible to achieve a reduction in thickness as compared with the case of a resin molding. Further, since it can be formed as a single sheet, it is possible to form the display elements without involving any blanks even when a plurality of depressing operation portions are provided. Further, the mounting is easy to perform, and the number of components can be reduced. The surface sheet can be formed as one composed at least of a base sheet formed of a resin film and a keytop formed of a resin film fixed to the base sheet.

In the key sheet of the third aspect of the present invention, the EL member is equipped with an EL element having at least a surface film constituting the light emission side, with the depressing operation portion constituting the surface film. Thus, there is no need to prepare a separate member as the depressing operation portion, making it possible to reduce the number of components and to realize a reduction in thickness.

In the key sheet of the third aspect of the present invention, the display layer is provided on the inner side of the surface film. That is, the display layer is on the inner side of the surface film constituting the interior of the EL element, so at the time of depressing operation, the display portion is prevented from being worn through rubbing, chipped, or erased.

In the illumination type key sheet of the present invention, due to the heat diffusion member, the local heat generated by the mounted elements on the circuit board can be efficiently diffused in the surface direction of the heat diffusion member. Thus, it is possible to prevent local heating of the EL member, and to make the EL member relatively free from generation of unevenness in luminance. Thus, even in the case of a functionally sophisticated electronic apparatus, it is possible to realize a long-term continuous illumination with uniform planar light emission and an increase in service life. At the same time, it is possible to prevent occurrence of a problem, such as malfunction or failure due to heat storage of the mounted elements.

The above-mentioned description of the present invention should not be construed restrictively. The advantages, features, and uses of the present invention will become more apparent from the following description given with reference to the accompanying drawings. Further, it should be understood that all the appropriate modifications made without departing from the gist of the present invention are covered by the scope of the present invention.

### BRIEF DESCRIPTION OF THE DRAWINGS

In the accompanying drawings;

Fig. 1 is an external view of a mobile phone equipped with an illumination type key sheet according to a first embodiment;

Fig. 2 is a main portion enlarged view taken along the line II-II of Fig. 1;

Fig. 3 is an exploded explanatory view of the illumination type key sheet according to the first embodiment;

Fig. 4A is an enlarged sectional view of a structure of an EL member according to an embodiment, and Fig. 4B is an enlarged sectional view of the structure of an EL member according to a modification;

Figs. 5A through 5F are explanatory views of sheet-like heat diffusion members according to various embodiments;

Fig. 6 is a sectional view of an illumination type key sheet according to a second embodiment;

Fig. 7 is an exploded explanatory view of the illumination type key sheet of the second embodiment;

Fig. 8 is a sectional view of an illumination type key sheet according to a third embodiment;

Fig. 9 is an exploded explanatory view of the illumination type key sheet according to the third embodiment;

Fig. 10 is a sectional view of a modification of the illumination type key sheet of the third embodiment;

Fig. 11 is a sectional view of an illumination type key sheet according to a fourth embodiment;

Fig. 12 is an exploded explanatory view of the illumination type key sheet according to the fourth embodiment;

Fig. 13 is a main portion enlarged view of a mobile phone equipped with a modification of the illumination type key sheet of the fourth embodiment;

Fig. 14 is a sectional view of an illumination type key sheet according to a fifth embodiment;

Fig. 15 is an exploded explanatory view of the illumination type key sheet according to the fifth embodiment;

Fig. 16 is a sectional view of a first modification of the illumination type key sheet of the fifth embodiment;

Fig. 17 is a sectional view of a second modification of the illumination type key sheet of the fifth embodiment;

Fig. 18 is a sectional view of a third modification of the illumination type key sheet of the fifth embodiment;

Figs. 19A through 19H are explanatory views of sheet-like heat diffusion members according to various embodiments;

Fig. 20 is a sectional view of an illumination type key sheet according to a sixth embodiment;

Fig. 21 is an exploded explanatory view of the illumination type key sheet according to the sixth embodiment;

Fig. 22 is a sectional view of an illumination type key sheet according to a seventh embodiment;

Fig. 23 is a sectional view of an illumination type key sheet according to an eighth embodiment;

Fig. 24 is an exploded explanatory view of the illumination type key sheet according to the eighth embodiment;

Fig. 25 is a sectional view of an illumination type key sheet according to a ninth embodiment;

Fig. 26 is an exploded explanatory view of the illumination type key sheet according to the ninth embodiment;

Fig. 27 is a sectional view of an illumination type key sheet according to a tenth embodiment;

Fig. 28 is an exploded explanatory view of the illumination type key sheet according to the tenth embodiment;

Fig. 29 is a sectional view of a first modification of the illumination type key sheet of the tenth embodiment;

Fig. 30 is a sectional view of a second modification of the illumination type key sheet of the tenth embodiment;

Fig. 31 is a sectional view of a third modification of the illumination type key sheet of the tenth embodiment;

Fig. 32 is a sectional view of an illumination type key sheet according to an eleventh embodiment; and

Fig. 33 is an explanatory view showing how heat diffusion property measurement is performed on an embodiment.

### DESCRIPTION OF THE PREFERRED EMBODIMENTS

In the following, embodiments of the present invention will be described with reference to the drawings. In the drawings, reference symbols indicate portions and components. The portions and components common to the embodiments are indicated by the same reference symbols, and a redundant description thereof will be omitted.

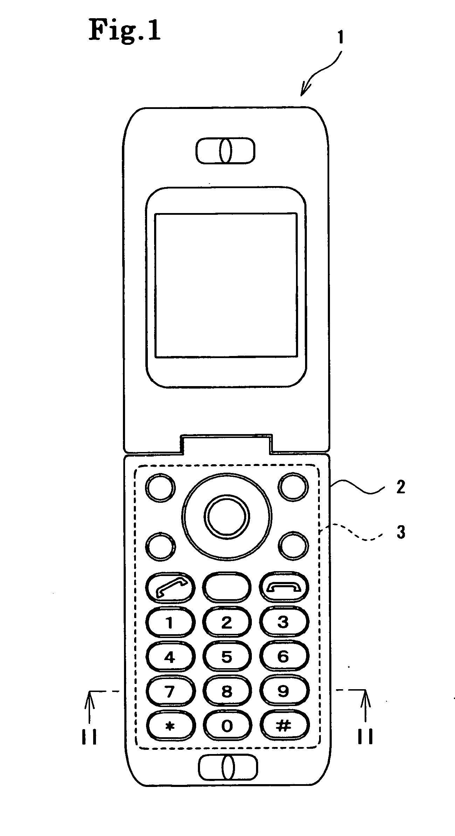

In the following embodiments described below, the present invention is applied to an illumination type key sheet incorporated into a casing (2) of a mobile phone (1) as shown in FIG. 1.

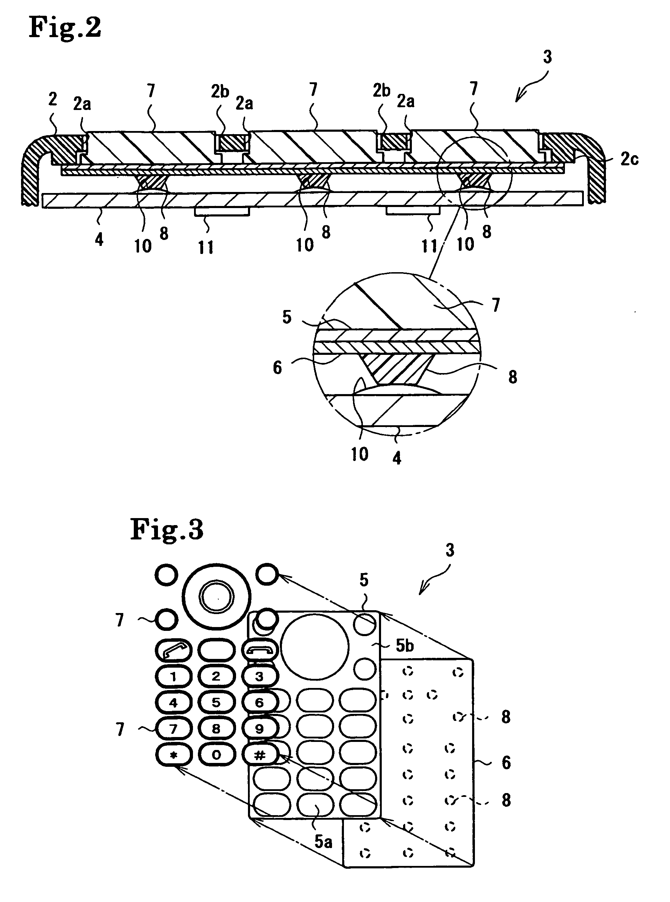

First Embodiment (Figs. 1 through 5): When mounted, an illumination type key sheet (3) is sandwiched in a pressurized state between the casing (2) of the mobile phone (1) and a circuit board (4). The illumination type key sheet (3) is equipped with an EL sheet (5) as the "EL member", a graphite sheet (6) as the "heat diffusion member", keytops (7) as the "depressing operation portions", and pusher portions (8).

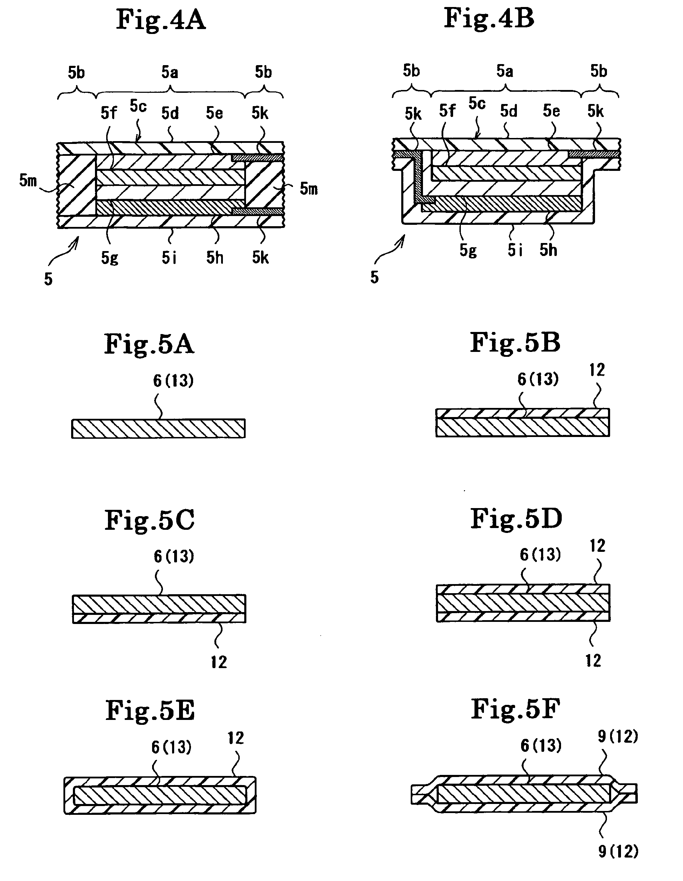

The EL sheet (5) is composed of light emitting portions (5a) and a non-light-emitting portion (5b) (Fig. 4A). Of those, each light emitting portion (5a) has a flexible inorganic dispersion type EL element (5c). The EL element (5c) is formed by successively stacking a surface film (5d), a transparent electrode (5e), a light emitting layer (5f), a dielectric layer (5g), a back surface electrode (5h), and a back surface film (5i), with compensation electrodes (5k) being connected to the transparent electrode (5e) and the back surface electrode (5k). The non-light-emitting portion (5b) has, instead of the EL elements (5c), an insulating resin (5m) between the surface film (5d) and the back surface film (5i). The keytops (7) are fixed to the portions of the operating surface side surface of the surface film (5d) corresponding to the light emitting portions (5a) by means of adhesive, and a graphite sheet (6) is intimately fixed to the surface of the back surface film (5h) opposed to the board by means of adhesive.

The graphite sheet (6) is held on both sides by two thin films (9), and the whole constitutes a sandwich structure (Fig. 5F). The reason for adopting this structure is that the graphite sheet (6) is physically fragile so that it has to be covered with the thin films (9) as polymer protective layers to be thereby protected.

The keytops (7) are formed of a translucent thermoplastic resin, and display elements, such as characters and symbols, are formed by printing on their surfaces fixed to the EL sheet (5).

The pusher portions (8) are formed of an ultraviolet curing resin, and are fixed to the surface of the graphite sheet (6), serving to depress contact switches (10) on the circuit board (4).

The casing (2) has operational openings (2a) respectively formed for the keytops (7), with the operational openings (2a) being partitioned by a partition frame (2b). On the inner surface of the casing (2), there is formed a protrusion (2c) in contact with the outer edge of the illumination type key sheet (3).

The circuit board (4) has contact switches (10) consisting of metal belleville springs on its surface opposed to the illumination type key sheet (3). On its back surface, there are mounted semiconductor devices (11) as electronic components.

Next, the nature of each member constituting the illumination type key sheet (3) will be described. The following description is also applicable to the embodiments described below.

Description will be made for materials to be used for the EL sheet (5). Each of the surface film (5d) and back surface film (5i) is composed of a resin having insulating properties and flexibility. For the EL sheet (5), there can be used, for example, a polyethylene terephthalate resin, a polyethylene naphthalate resin, a polyarylate resin, a polyimide resin, a polyurethane resin, a nylon resin, or the like.

The transparent electrode (5e) is composed of a material having transparency and electrical conductivity. For example, there can be used a thin film of indium-tin oxide (hereinafter, referred to as "ITO") formed by a dry plating method or coating. There can be used a thin film formed of a polyacetylene-based electrically conductive polymer, a polythiophene-based electrically conductive polymer, a polypyrrole-based electrically conductive polymer, a polyparaphenylene-based electrically conductive polymer, or the like by coating.

The light emitting layer (5f) is composed of a coating film containing an illuminant powder. As an illuminant powder, for example, there can be used one obtained by doping zinc sulfide with copper and activating each of manganese and aluminum. The illuminant powder obtained by additionally subjecting its surface to coating with an oxide or a nitride to increase the humidity resistance is also a preferable material.

The dielectric layer (5g) is composed of a material having electrically insulating properties and a high dielectric constant. As the dielectric layer, there can be used, for example, a thin film obtained by dispersing a fine powder of barium titanate into a resin such as a fluorine-based resin, a cyano-based resin, or a polyester-based resin.

The back surface electrode (5h) is composed of a material having electrical conductivity. For example, the back surface electrode (5h) which is used can be formed by using aluminum, silver, ITO, carbon, or the like by a dry plating method or coating.

The graphite sheet (6) is composed of a material having flexibility. For example, a polymer film is subjected to heat treatment to make a graphite film. To be specific, the graphite sheet (6) can be produced by: subjecting a polyimide film to heat treatment at a temperature of 2,400°C or higher under an inert gas to have a graphite structure in a foam; and rolling and processing the resultant into a sheet. As another method, there can also be utilized a method including treating a natural graphite with an aqueous solution of a strong acid and processing the resultant by pressing or plating into a sheet.

The thin film (9) is preferably a resin film excellent in flexibility such that no cracking occurs due to deformation involved in input operations. In the case of a resin film, for example, there can be utilized a film of polyethylene terephthalate, polybutylene terephthalate, polycarbonate, polyimide, polyurethane, polyethylene, polypropylene, or the like. Those films may be integrated via an adhesive layer or an adhesion layer, or by means of dry lamination.

The key top (7) is composed of a translucent material. For the key top (7), there can be used, for example, a polycarbonate resin, an acrylic resin, an epoxy resin, a silicone resin, glass, ceramic, or the like.

The pusher portion (8) is composed of a reaction curable resin or a thermoplastic resin. For the pusher portion (8), there can be used, for example, an acrylic resin, a urethane resin, an epoxy resin, a cyanoacrylate resin, a polyethylene resin, a polypropylene resin, a polyester resin, a polystyrene resin, or the like. Of those, there can be preferably utilized a reaction curable resin which is cured due to an active energy ray such as an ultraviolet ray, a visible light ray, or an electron ray.

Next, the operation and effects of the illumination type key sheet (3) of this embodiment will be described.

Due to the graphite sheet (6), local heat generated by the semiconductor device (11) on the board can be efficiently diffused in the surface direction of the graphite sheet (6). Thus, it is possible to prevent local heating of the EL sheet (5), making the EL sheet (5) relatively free from generation of unevenness in luminance. At the same time, it is possible to prevent problems, such as malfunction and failure, that can occur due to heat storage of the semiconductor devices (11).

The graphite sheet (6) is held in intimate contact with the surface of the EL sheet (5) opposed to the board. That is, the graphite sheet (6) is between the EL sheet (5) and the semiconductor devices (11) of the board, and diffuses the local heat generated by the semiconductor devices (11) in the surface direction of the graphite sheet (6). Thus, it is possible to prevent local heating of the EL sheet (5). As a result, the EL sheet (5) is made relatively free from generation of unevenness in luminance. Further, since the EL sheet (5) and the graphite sheet (6) are in intimate contact with each other, tautness is imparted to the EL sheet (5), making it relatively free from deflection.

As compared with other materials, the graphite sheet (6) exhibits relatively high heat conductivity and allows efficient heat diffusion, and is lightweight, so it can meet the requirement for a reduction in the weight of mobile electronic apparatuses. Further, since the graphite sheet (6) is held on both sides between the two thin films (9) and the whole exhibits a sandwich structure, it is possible to perfectly prevent detachment of an end portion of the graphite sheet (6), which is physically fragile.

Since the depressing operation portions consist of the keytops (7), the operator can easily find the operating position if the keytops (7) are exposed through the operational openings (2a) formed in the casing (2) of the electronic apparatus, making it possible to correctly perform input operation through depression of the keytops (7). Further, when the keytops (7) are depressed, the portions of the EL sheet (5) corresponding to the fixed surfaces of the keytops (7) are not expanded or bent, so no breakage occurs in these portions, making it possible to realize a long-life illumination.

Modification of the EL member: As shown in Fig. 4B, in a modification of the EL member, a resist ink layer (5i) is formed instead of the back surface film (5i), and the non-light-emitting portion (5b) is formed by the surface film (5d) and the resist ink layer (5i). By substituting the back surface film (5i) by the resist ink layer (5i), a reduction in the thickness of the EL element (5c) is attained, making it possible to realize a reduction in the thickness of the illumination type key sheet (3) itself. Further, the portion of the non-light-emitting portion (5b) deflected at the time of depressing operation is more flexible than the EL sheet (5) described above, so it is possible to achieve a reduction in depression load. These features are also applicable to other embodiments and modifications. It is desirable for the material of the resist ink layer (5i) to be an insulating resin, such as a polyester resin, a urethane resin, or a acrylic resin.

Various embodiments of the sheet-like heat diffusion member: In the following, various embodiments of the heat diffusion member will be described. As shown in section in Figs. 5A through 5F, the sheet-like heat diffusion member can be realized in various forms equipped with a polymer protective layer (12). Since the graphite sheet (6) and the thin metal plate (13) exhibit conductivity, the polymer protective layer (12) may be used as an electrically insulating layer. Further, since the graphite sheet (6) is physically fragile, it may be made relatively free from breakage or chipping by the polymer protective layer (12). These features are also applicable to other embodiments and modifications.

FIG. 5A shows a mode in which a graphite sheet (6) or a thin metal plate (13) is used alone as the heat diffusion member.

Fig. 5B shows a form in which the upper surface of the heat diffusion member (6, 13) is covered with the polymer protective layer (12). In this form, the upper surface of the heat diffusion member (6, 13) does not come into contact with any other member, so it is possible to prevent the upper surface of the heat diffusion member (6, 13) from being damaged.

FIG. 5C shows a mode in which the lower surface of the heat diffusion member (6, 13) is covered with the polymer protective layer (12). If the heat diffusion member (6, 13), which has electrical conductivity, comes into contact with a plurality of wirings on the circuit board, there is a fear of short-circuiting, which may lead to generation of a malfunction of the circuit, etc. In this mode, the heat diffusion member (6, 13) is not in direct contact with the circuit board, so there is an advantage that it is possible to place the heat diffusion member (6, 13) as it is without covering the circuit board surface with the insulating layer.

FIG. 5D shows a mode in which the upper surface and the lower surface of the heat diffusion member (6, 13) are covered with the polymer protective layers (12). In this mode, it is possible to obtain the advantages of the modes shown in FIGS. 5B and 5C.

FIG. 5E shows a mode in which the entire heat diffusion member (6, 13) is covered with a coating layer as the polymer protective layer (12). In this mode, the entire heat diffusion member (6, 13) is sealed by the polymer protective layer (12), so it is possible to completely prevent detachment of an end portion of the heat diffusion member (6, 13).

FIG. 5F shows a mode in which the entire heat diffusion member (6, 13) is covered by being sandwiched between two upper and lower resin films as the polymer protective layers (12). As in the mode of FIG. 5E, in this mode, it is possible to completely prevent detachment of an end portion of the heat diffusion member (6, 13).

Here, the material of the polymer protective layer (12) shown in FIGS. 5B through 5F will be described.

It is desirable for the material of the polymer protective layer (12) to be a resin film or a coating film superior in flexing resistance so that no crack may be generated due to the deformation as a result of input operation. Examples of the resin film that can be used include films of polyethylene terephthalate, polybutylene terephthalate, polycarbonate, polyimide, polyurethane, polyethylene, polypropylene, and the like. The resin films may be integrated via an adhesive layer or a adhesive layer, or by means of dry lamination. Examples of the material of the coating film that can be used include urethane-based coating, epoxy-based coating, imide-based coating, acrylic coating, fluorine-based coating, and silicone-based coating. The coating film may be formed through application of a paint selected from the above-mentioned ones.

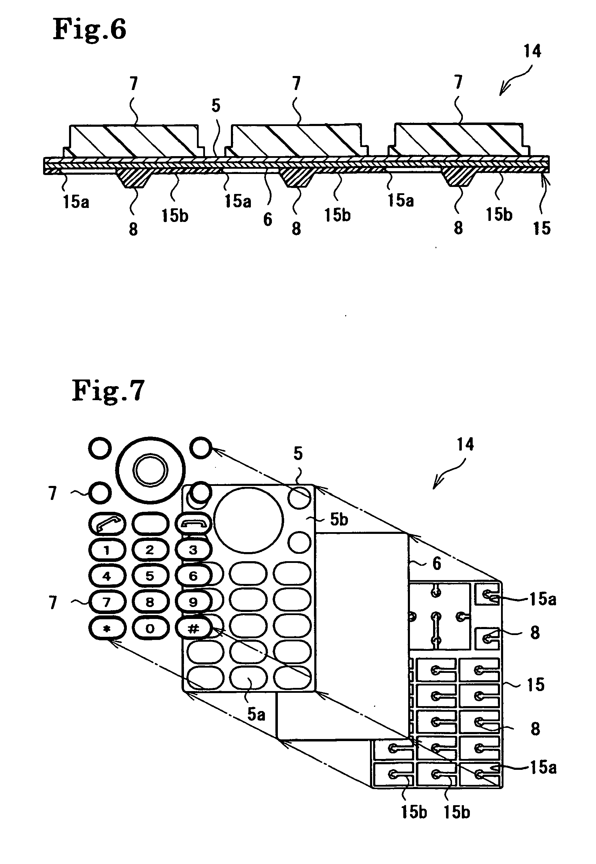

Second Embodiment (FIGS. 6 and 7) An illumination type sheet (14) according to a second embodiment differs from the illumination type key sheet (3) of the first embodiment in the structure in which the base sheet (15) is equipped. Other than the above-mentioned point, the key sheet (19) is of the same construction as in the first embodiment.

The base sheet (15) is formed of a thermoplastic resin in a sheet-like configuration. At the positions of the base sheet (15) corresponding to the keytops (7), there are provided holes (15a) extending through the sheet thickness, with protrusions (15b) protruding from edges of the holes (15a) toward the centers thereof. The distal ends of the protrusions (15b) are situated at the centers of the holes (15a) and have pusher portions (8) on their surfaces facing the board. Their surfaces on the opposite side of the board are intimately fixed to the surface of the graphite sheet (6) opposed to the board.

Like the illumination type key sheet (3) of the first embodiment, the illumination type key sheet (14) of the second embodiment can make the EL sheet (5) relatively free from generation of unevenness in luminance, help prevent malfunction or failure of the semiconductor devices (11), perfectly prevent detachment of an end portion of the graphite sheet (6), and realize a long-life illumination. Further, it provides the following effects.

In the illumination type key sheet (14), a plurality of pusher portions (8) are formed integrally with the base sheet (15), so it is possible to attach the plurality of pusher portions (8) easily to the surface of the graphite sheet (6) opposed to the board.

Further, since the base sheet (15) is in intimate contact with the surface of the graphite sheet (6) opposed to the board, it is possible to use a graphite sheet (6) whose lower surface is not covered with the polymer protective layer (12) as shown in Figs. 5A and 5B.

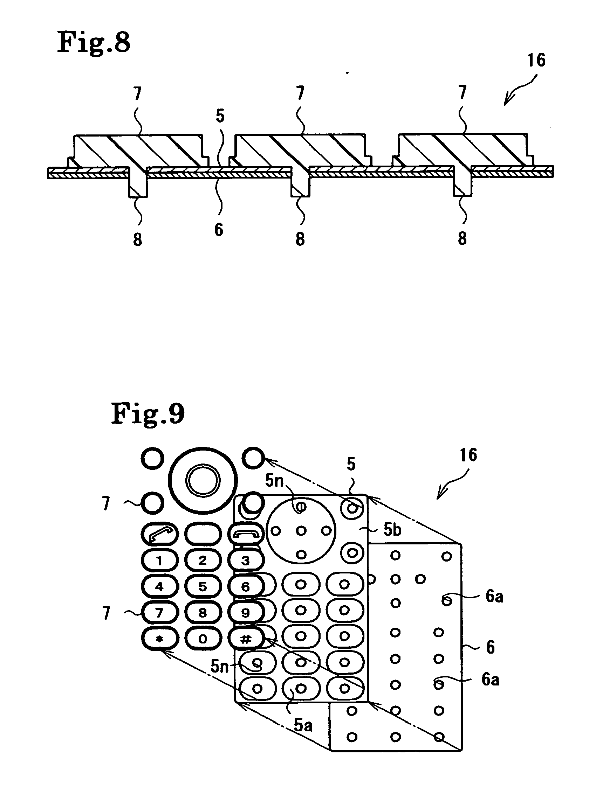

Third Embodiment (Figs. 8 and 9): A key sheet (16) according to the third embodiment differs from the illumination type key sheet (3) of the first embodiment in the construction of the EL sheet (5), the graphite sheet (6), and the keytops (7). Otherwise, this embodiment is of the same construction as the first embodiment.

The keytops (7) have columnar pusher portions (8) extending from their surfaces fixed to the EL sheet (5) and passed through holes (5n, 6a) extending through the EL sheet (5) and the graphite sheet (6) protrude from the surface of the graphite sheet (6) opposed to the board. On the surfaces of the keytops constituting the operating surfaces, display elements are formed by coating.

Like the illumination type key sheet (3) of the first embodiment, the illumination type key sheet (16) of the third embodiment can make the EL sheet (5) relatively free from generation of unevenness in luminance, help prevent malfunction or failure of the semiconductor devices (11), perfectly prevent detachment of an end portion of the graphite sheet (6), and realize a long-life illumination. Further, it provides the following effects.

In the illumination type key sheet (16), the EL sheet (5) and the graphite sheet (6) are not crushed between the keytops (7) and the pusher portions (8) at the time of depressing operation, so they do not suffer breakage easily. Thus, it is possible to prevent failure of the EL sheet (5) to emit light and a reduction in the heat conductivity of the graphite sheet (6), thereby realizing a long-life illumination.

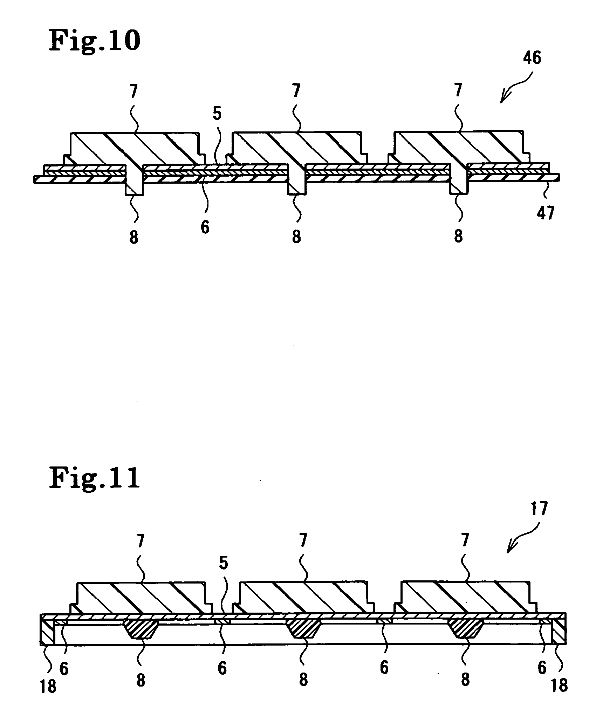

Modification of the Third Embodiment (Fig. 10): In an illumination type key sheet (46) according to a modification of the third embodiment, an insulating base sheet (47) formed of a rubber-like elastic material is provided on the surface of the graphite sheet (6) opposed to the board.

Like the illumination type key sheet (16), the illumination type key sheet (46) of the modification of the third embodiment is relatively free from generation of unevenness in luminance in the EL sheet (5), and can prevent malfunction and failure of the semiconductor devices (11) and perfectly prevent detachment of an end portion of the graphite sheet (6), making it possible to realize a long-life illumination.

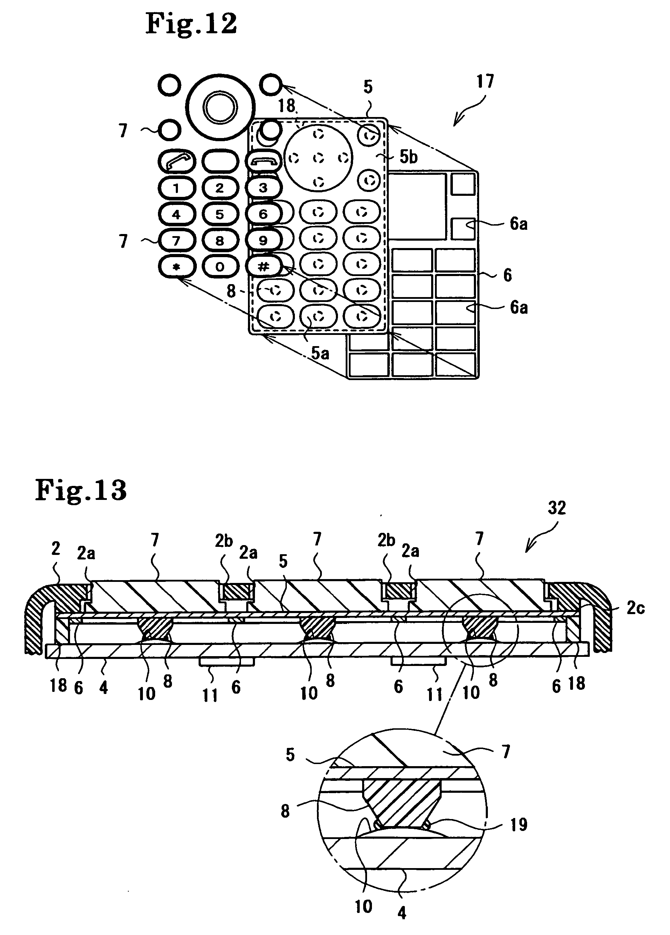

Fourth Embodiment (Figs. 11 and 12): An illumination type key sheet (17) according to the fourth embodiment differs from the illumination type key sheet (3) of the first embodiment in the structure of the graphite sheet (6). Otherwise, this embodiment is of the same construction as the first embodiment.

The graphite sheet (6) is provided with holes (6a) extending therethrough in correspondence with the keytops (7); its outer edge portion is formed somewhat smaller than the outer edge portion of the EL sheet (5).

On the surface of the EL sheet (5) opposed to the board, there are provided, apart from the graphite sheet (6), the pusher portions (8) and an outer peripheral rib (18). The pusher portions (8) are within the holes (6a) of the graphite sheet (6), and the outer peripheral rib (18) is fixed to the outer peripheral edge of the EL sheet (5) on the outer side of the outer edge of the graphite sheet (6). Both are formed through coating of a ultraviolet curing resin by means of a dispenser.

Like the illumination type key sheet (3) of the first embodiment, the illumination type key sheet (17) of the fourth embodiment can make the EL sheet (5) relatively free from generation of unevenness in luminance, help prevent malfunction or failure of the semiconductor devices (11), perfectly prevent detachment of an end portion of the graphite sheet (6), and realize a long-life illumination. Further, it provides the following effects.

In the illumination type key sheet (17), when the keytops (7) are depressed, input is effected through the EL sheet (5) without depressing the graphite sheet (6), so it is possible to perform input operation with small depression load.

Further, when incorporating the illumination type key sheet (17) into the mobile phone (1), the outer peripheral rib (18) is held between the casing (2) and the circuit board (4), whereby the outer peripheral rib (18) exerts a sealing function to provide waterproofness.

Modification of the Fourth Embodiment (Fig. 13): Unlike the illumination type key sheet (17), an illumination type key sheet (32) according to a modification of the fourth embodiment has no pusher portions (8). Instead, substantially cone-frustum-shaped pusher portions (8) are fixed, by means of adhesive (19), to the contact switches (10) composed of metal belleville springs and provided on the circuit board (4).

Like the illumination type key sheet (17), the illumination type key sheet (32) of the modification of the fourth embodiment is capable of making the EL sheet (5) relatively free from generation of unevenness in luminance, preventing malfunction and failure of the semiconductor devices (11), perfectly preventing detachment of an end portion of the graphite sheet (6), realizing a long-life illumination, allowing input operation with small depression load, and providing waterproofness.

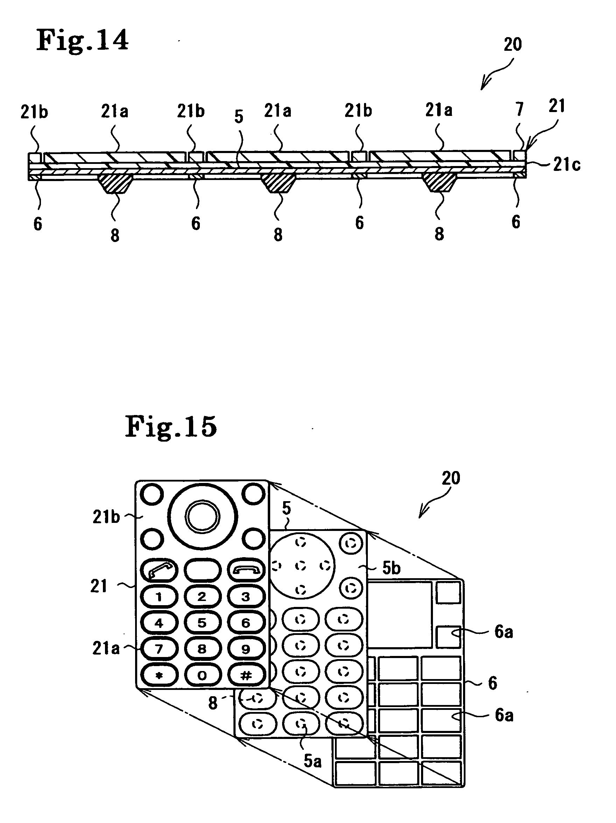

Fifth Embodiment (Figs. 14 and 15): An illumination type key sheet (20) according to the fifth embodiment differs from the illumination type key sheet (17) of the fourth embodiment in that the keytops (7) and the outer peripheral rib (18) are removed and that a surface sheet (21) is provided. Otherwise, this embodiment is of the same construction as the fourth embodiment.

The surface sheet (21) is equipped with keytops (21 a), a frame sheet (21 b), and a base sheet (21c). These three members are all formed of resin films. In particular, when this key sheet is used in a portable apparatus of which there is a high demand for a reduction in thickness as in the case of a mobile phone, the thickness of the resin films constituting the keytops (21 a) and the frame sheet (21 c) ranges from 0.2 mm to 0.4 mm, and the thickness of the resin film constituting the base sheet (21c) ranges from 0.005 mm to 0.1 mm. The frame sheet (21 b) is formed in the same thickness as the keytops (21a) so as to surround the keytops (21a), with both members being fixed to the operating-surface-side surface of the base sheet (21c). This fixation is effected, for example, by applying a hot-melt adhesive to the entire bottom surfaces of the keytops (21a) and the frame sheet (21 b). The back surface of the base sheet (21c) is fixed to the EL sheet (5) by an adhesive or a double-faced tape provided in the outer periphery.

Like the illumination type key sheet (17) of the fourth embodiment, the illumination type key sheet (20) of the fifth embodiment can make the EL sheet (5) relatively free from generation of unevenness in luminance, help prevent malfunction or failure of the semiconductor devices (11), perfectly prevent detachment of an end portion of the graphite sheet (6), and realize a long-life illumination. Further, it provides the following effects.

In the illumination type key sheet (20), in which the surface sheet (21) is used in the depressing operation portion, the depressing operation portion is thin, making it possible to realize a reduction in thickness and weight. In particular, when a resin film having a thickness of 0.2 mm to 0.4 mm is used for a portable apparatus, it is possible to realize an ultra-reduction in weight and thickness.

When a urethane resin film, which is soft, is used for the base sheet (21c), it is possible to reduce the depression load. Further, when, for example, a polyethylene terephthalate resin film, which is more rigid than a urethane resin film, is used for the frame sheet (21 b), tautness is imparted to the surface sheet (21), and the assembly is facilitated.

Since the surface sheet (21) is composed of a single sheet, the assembly is facilitated, and the number of components can be reduced. In particular, in the construction in which, as described above, the keytops (21a) and the frame sheet (21 b) are fixed to the base sheet (21c) by hot-melt adhesion, and in which the base sheet (21c) is fixed to the EL sheet (5) by adhesive or a double-faced tape, there is generated no defect in the EL sheet (5), which is to be feared in the case in which the keytops (21 a) and the frame sheet (21 b) are bonded to the EL sheet (5) by pressurization and hot-melt adhesion. Further, the fixation of the surface sheet (21) and the EL sheet (5) by adhesive and a double-faced tape is advantageous in that one of them can be replaced with ease. While in the above-mentioned example the surface sheet (21) is provided with the frame sheet (21 b), it is also possible to adopt a structure having the keytops (21 a) alone, with the frame sheet (21 b) omitted.

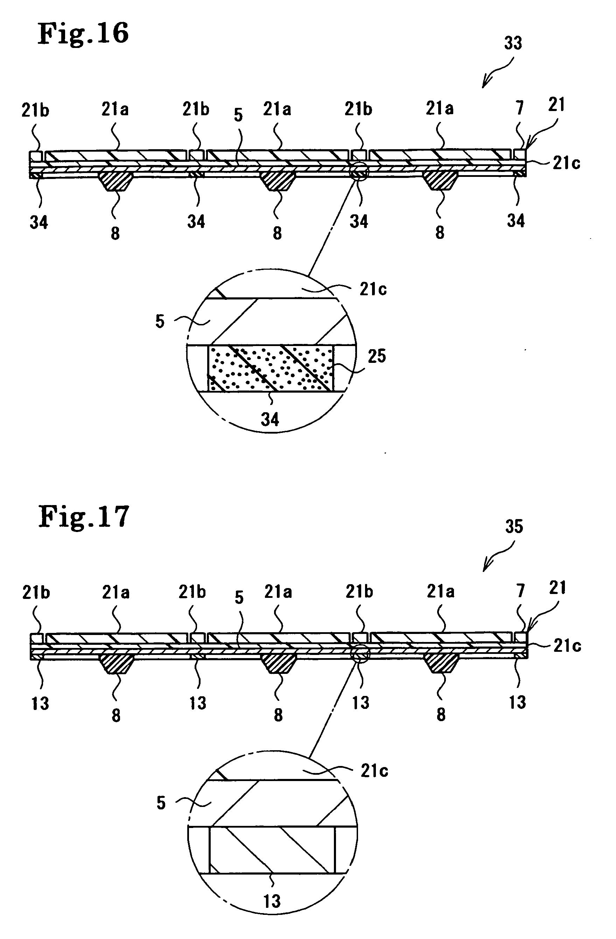

First Modification of the Fifth Embodiment (Fig. 16): While in the illumination type key sheet (20) of the fifth embodiment the graphite sheet (6) is used as the heat conducting member, in an illumination type key sheet (33) according to a first modification of the fifth embodiment, it is possible to provide as the heat conducting member a rubber sheet (34) formed of a rubber-like elastic material in which a heat conductive filler (25) is dispersed.

As in the case of the illumination type key sheet (20), advantages and effects of the first modification of the fifth embodiment can make the EL sheet (5) relatively free from generation of unevenness in luminance, prevent malfunction and failure of the semiconductor devices (11), perfectly prevent detachment of an end portion of the graphite sheet (6), realize a long-life illumination and a reduction in thickness, weight, and depression load, facilitate the assembly, and reduce the number of components.

Second Modification of the Fifth Embodiment (Fig. 17): While in the illumination type key sheet (20) of the fifth embodiment the graphite sheet (6) is used as the heat conducting member, in an illumination type key sheet (35) according to a second modification of the fifth embodiment, it is possible to provide as the heat conducting member a thin metal plate (13).

As in the case of the illumination type key sheet (20), the second modification of the fifth embodiment can make the EL sheet (5) relatively free from generation of unevenness in luminance, prevent malfunction and failure of the semiconductor devices (11), perfectly prevent detachment of an end portion of the graphite sheet (6), realize a long-life illumination and a reduction in thickness, weight, and depression load, facilitate the assembly, and reduce the number of components.

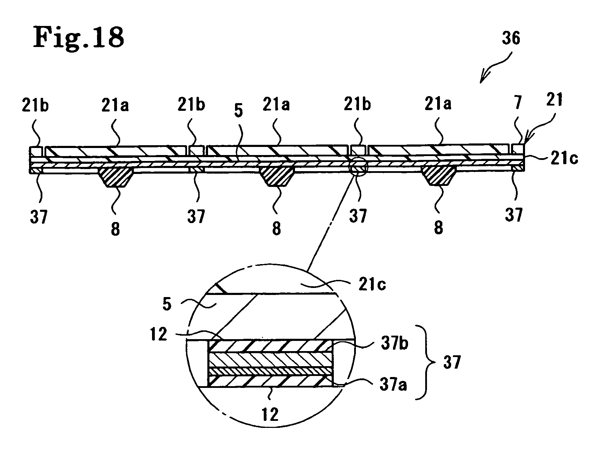

Third Modification of the Fifth Embodiment (Fig. 18): While in the illumination type key sheet (20) of the fifth embodiment the graphite sheet (6) is used as the heat conducting member, in an illumination type key sheet (36) according to a third modification of the fifth embodiment, it is possible to provide as the heat conducting member a double-layered laminate sheet (37) formed by stacking together a thin metal plate (37a) and a graphite sheet (37b).

As in the case of the illumination type key sheet (20), advantages and effects of the third modification of the fifth embodiment can make the EL sheet (5) relatively free from generation of unevenness in luminance, prevent malfunction and failure of the semiconductor devices (11), perfectly prevent detachment of an end portion of the graphite sheet (6), realize a long-life illumination and a reduction in thickness, weight, and depression load, facilitate the assembly, and reduce the number of components.

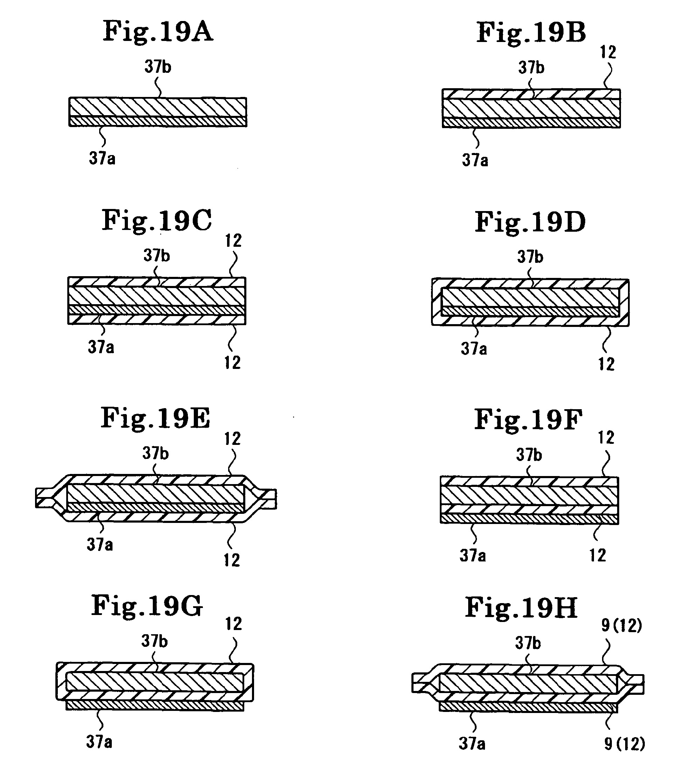

Description of an embodiment of the heat diffusion member (37) of a double-layer structure: While in the third modification of the fifth embodiment described above an example of the double-layered heat diffusion member (37) is adopted, the heat diffusion member (37) formed by stacking together the thin metal film (37a) and the graphite sheet (37b) can be realized in various forms provided with the polymer protective layer (12) as shown in the sectional views of Figs. 19A through 19H. Hereinafter, various structures shown in Figs. 19A through 19H will be described. Since the thin metal plate (37a) and the graphite sheet (37b) have conductivity, the polymer protective layer (12) may be used as an electrically insulating layer.

Fig. 19A shows a form in which solely the thin metal plate (37a) and the graphite sheet (37b) are used as the heat diffusion member (37).

Fig. 19B shows a form in which the outer surface of the graphite sheet (37b) of the heat diffusion member (37) is covered with the polymer protective layer (12). In this form, due to the polymer protective layer (12), the graphite sheet (37b) does not easily suffer breakage or chipping, and is prevented from being detached.

Fig. 19C shows a form in which, as in the third modification of the fifth embodiment, the upper and lower surfaces of the heat diffusion member (37) are covered with the polymer protective layers (12). In this form, in addition to the advantage of the form of Fig. 19B, the heat diffusion member (37) does not come into direct contact with the board no matter which of the thin metal plate (37a) and the graphite sheet (37b) may be opposed to the board, so the heat diffusion member (37) can be placed as it is without having to cover the board surface with an insulating layer.

Fig. 19D shows a form in which the entire heat diffusion member (37) is covered with a coating constituting the polymer protective layer (12). In this form, the heat diffusion member (37) as a whole is sealed by the polymer protective layer (12), so it is possible to perfectly prevent detachment of an end portion of the heat diffusion member (37).

Fig. 19E shows a form which adopts a sandwich structure in which the heat diffusion member (37) as a whole is held between two resin films, that are the polymer protective layers (12). Like the form of Fig. 19D, this form helps to perfectly prevent detachment of an end portion of the heat diffusion member (37).

Fig. 19F shows a form in which the upper and lower surfaces of the graphite sheet (37b) are respectively covered with the polymer protective layers (12) and in which a thin metal plate (37a) is stacked on the outer surface thereof. In this form, the thin metal plate (37a) is exposed on the outer surface, so it is possible to achieve an enhancement in heat conductivity as compared with the above-mentioned form shown in Fig. 5D.

Fig. 19G shows a form in which the graphite sheet (37b) as a whole is covered with coating constituting the polymer protective layer (12) and the thin metal plate (37a) is stacked on the outer surface of the whole. In this form, the thin metal plate (37a) is exposed on the outer side, so it is possible to achieve an enhancement in heat conductivity as compared with the above-mentioned form shown in Fig. 5E.

Fig. 19H shows a form in which the graphite sheet (37b) as a whole is sandwiched between two resin films, that are, the polymer protective layers (12) and covered therewith and the thin metal plate (37a) is stacked on the outer surface of the whole. In other words, this form is composed of a laminate obtained by stacking the thin metal plate (37a) on the graphite sheet (37b) whose both surfaces are covered with the polymer protective layers (12). In this form, the thin metal plate (37a) is exposed on the outer side, so it is possible to achieve an enhancement in heat conductivity as compared with the above-mentioned form shown in Fig. 5F.

While in Figs. 19A through 19H, the thin metal plate (37a) is stacked on the back surface of the graphite sheet (37b), it is also possible to stack the thin metal plate (37a) on the front surface of the graphite sheet (37b). However, as compared with the form in which the thin metal plate (37a) is stacked on the front surface, the form in which the thin metal plate (37a) is stacked on the back surface helps to further enhance the heat diffusion efficiency.

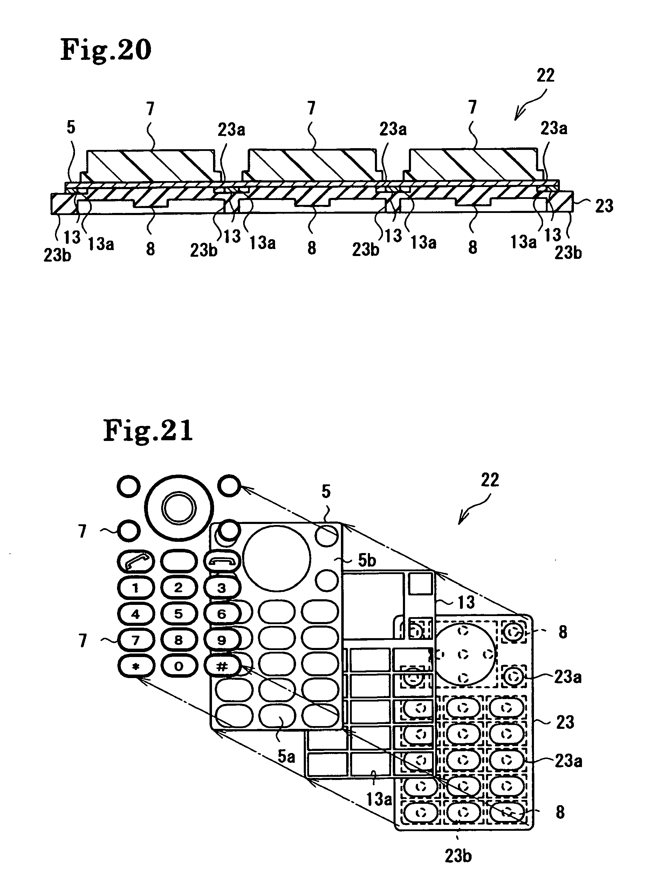

Sixth Embodiment (Figs. 20 and 21): An illumination type key sheet (22) according to the sixth embodiment differs from the illumination type key sheet (17) of the fourth embodiment in that it is equipped with a thin metal plate (13) as the "heat diffusion member" and a base sheet (23). Otherwise, this embodiment is of the same construction as the fourth embodiment.

Like the graphite sheet (6) of the fourth embodiment, the thin metal plate (13) is provided with holes (13a) situated in correspondence with the keytops (7) and extending through the thickness thereof; the outer edge portion thereof is formed in substantially the same size as the outer edge portion of the EL sheet (5).

The base sheet (23) is formed of an insulating rubber-like elastic material. Pedestal portions (23a) are formed on its front surface constituting the operating surface; the EL sheet (5) is fixed to the pedestal portions (23a), and the thin metal plate (13) is fixed to the entire outer periphery of the pedestal portions (23a) and the portion between the adjacent pedestal portions (23a). On its back surface opposed to the circuit board (4), there are formed columnar pusher portions (8) respectively in correspondence with the pedestal portions (23a), and leg portions (23b) are formed to protrude in the entire outer periphery and between the adjacent pedestal portions (23a), with the distal ends of the leg portions (23b) being in contact with the surface of the circuit board (4). The leg portions (23b) have a sealing function similar to that of the outer peripheral rib (18) of the fourth embodiment.

Here, the "rubber-like elastic material" constituting the base sheet (23) will be described. The following description is commonly applicable to the other embodiments described below.

The material for "rubber-like elastic material" is preferably a rubber or a thermoplastic elastomer each having high impact resilience. In a case of a rubber, a natural rubber, a silicone rubber, an ethylene-propylene rubber, a butadiene rubber, an isoprene rubber, a chloroprene rubber, a urethane rubber, or the like may be used. In a case of a thermoplastic elastomer, a styrene-based thermoplastic elastomer, an olefin-based thermoplastic elastomer, an ester-based thermoplastic elastomer, a urethane-based thermoplastic elastomer, an amide-based thermoplastic elastomer, a butadiene-based thermoplastic elastomer, an ethylene-vinyl acetate-based thermoplastic elastomer, a fluoro-rubber-based thermoplastic elastomer, an isoprene-based thermoplastic elastomer, a chlorinated polyethylene-based thermoplastic elastomer, or the like may be used. Of those, a silicone rubber, a styrene-based thermoplastic elastomer, and an ester-based thermoplastic elastomer are preferable materials from viewpoints of excellent impact resilience and an excellent durability.

Like the illumination type key sheet (17) of the fourth embodiment, the illumination type key sheet (22) of the sixth embodiment can make the EL sheet (5) relatively free from generation of unevenness in luminance, prevent malfunction and failure of the semiconductor devices (11), realize a long-life illumination, allow input operation with small depression load, and provide waterproofness. Further, it provides the following effects.

Since the thin metal plate (13) is thin and exhibits high mechanical strength, the illumination type key sheet (22) exhibits high rigidity. Thus, the illumination type key sheet (22) can be easily incorporated into the mobile phone (1) without being warped. When mounted, the illumination type key sheet (22) is not easily deflected, so it is also applicable to narrow-clearance keytops (7) not allowing formation of the partition frame (2a) in the casing (2). Further, the heat diffusion member can be made thin, making it possible to achieve a reduction in the thickness of the illumination type key sheet (22).

Due to the provision of the base sheet (23) on the surface of the thin metal plate (13) opposed to the board, the base sheet (23) does not come into direct contact with the wiring of the circuit board (4), so, even when the thin metal plate (13) has conductivity, it is possible to prevent short-circuiting of the circuit.

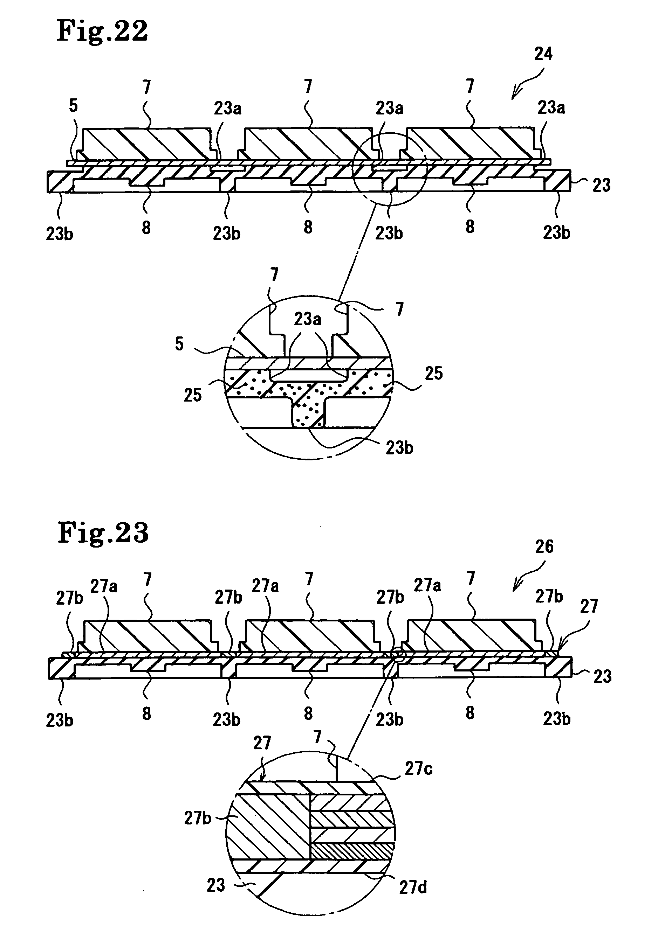

Seventh Embodiment (Fig. 22): An illumination type key sheet (24) according to the seventh embodiment differs from the illumination type key sheet (22) of the sixth embodiment in that the thin metal plate (13) is omitted and that a base sheet (23) also serving as the "heat diffusion member" is provided. Otherwise, this embodiment is of the same construction as the sixth embodiment.

The base sheet (23) is formed of a rubber-like elastic material in which a heat conductive filler (25) is dispersed. From the viewpoint of the thermal characteristics and flexibility of the molding, the content of the heat conductive filler (25) preferably ranges from 5 vol% to 60 vol%. When its content is less than 5 vol%, the heat conductive filler (25) is too sparse to allow effective heat conduction in the base sheet (23). On the other hand, when the content of the heat conductive filler (25) exceeds 60 vol%, the requisite flexibility of the base sheet (23) for light depressing operation of the keytops (7) is lost.

Here, the material of the heat conductive filler (25) will be described. The following description is also applicable to the embodiments described below.

For a material for the heat conductive filler (25), there can be used at least one kind of materials selected from the group consisting of: a carbon material such as a carbon fiber, a carbon nanotube, a vapor phase grown fine carbon fiber, or a graphite particle; a metal nitride such as boron nitride, aluminum nitride, or silicon nitride; a metal oxide such as aluminum oxide, magnesium oxide, or zinc oxide; a metal carbide such as titanium carbide or chromium carbide; and a metal hydroxide such as aluminum hydroxide or magnesium hydroxide. Of those, boron nitride, aluminum oxide, and aluminum hydroxide can preferably be used as the materials from viewpoints of excellent translucency and high environmental stability.

Like the illumination type key sheet (22) of the sixth embodiment, the illumination type key sheet (24) of the seventh embodiment can make the EL sheet (5) relatively free from generation of unevenness in luminance, prevent malfunction and failure of the semiconductor devices (11), realize a long-life illumination, allow input operation with small depression load, and provide waterproofness. Further, it provides the following effects.

In the illumination type key sheet (24), it is possible to diffuse heat efficiently in the surface direction of the base sheet (23) without having to mount a separate member for heat diffusion. Thus, it is possible to meet the demand for a reduction in the thickness of the mobile phone (1). It is also possible to orient the heat conductive filler (25) by a high magnetic field to thereby make the heat conductivity of the base sheet (23) higher in the surface direction than in the thickness direction.

The base sheet (23) is formed of a rubber-like elastic material, so it is flexible even when the heat conductive filler (25) is dispersed in the base sheet (23), and is superior in rebound resilience and flexibility. Thus, it is possible to realize a long-life illumination type key sheet (24) allowing reliable input operation for a long period of time.

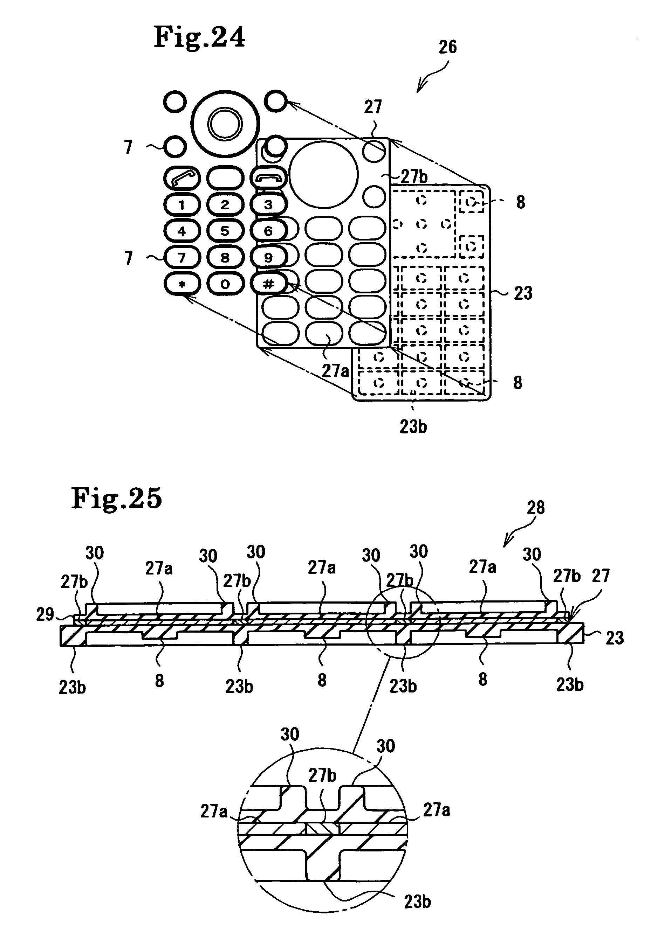

Eighth Embodiment (Figs. 23 and 24): An illumination type key sheet (26) according to the eighth embodiment differs from the illumination type key sheet (22) of the sixth embodiment in that the base sheet (23) has no EL sheet (5) or thin metal plate (13) and, instead, is equipped with a composite sheet (27) serving as the "EL member" and the "heat diffusion member". Otherwise, this embodiment is of the same construction as the sixth embodiment.

In the composite sheet (27), the resin (5m) of the non-light-emitting portion (5b) of the EL sheet (5) shown in Fig. 4A is replaced by graphite. There is provided a graphite sheet (27b) having EL elements (27a) in the light emitting portions corresponding to the keytops (7) and holes extending through the thickness of the sheet in correspondence with the keytops (7).

In the base sheet (23), the surface constituting the operating surface is flat, and has no pedestal portions (23a) as provided on the base sheet (23) of the sixth embodiment.

Like the illumination type key sheet (22) of the sixth embodiment, the illumination type key sheet (26) of the eighth embodiment can make the EL elements (27a) relatively free from generation of unevenness in luminance, prevent malfunction and failure of the semiconductor devices (11), realize a long-life illumination, allow input operation with small depression load, and provide waterproofness. Further, it provides the following effects.

In the illumination type key sheet (26), the graphite sheet (27b) and the EL elements (27a) constitute the same layer, so it is possible to achieve a reduction in thickness as compared with the construction in which the graphite sheet (6) and the EL sheet (5) are stacked together as separate members.

The graphite sheet (27b) has its upper surface covered with a surface film (27c) and its lower surface covered with a resist ink layer (27d), so it is free from damage due to rubbing, etc.

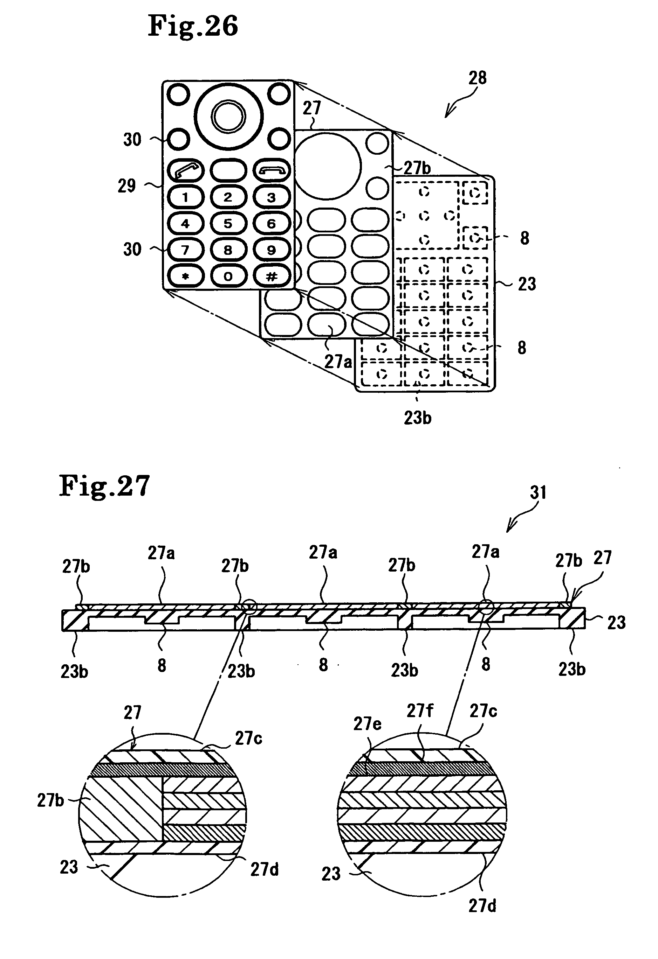

Ninth Embodiment (Figs. 25 and 26): An illumination type key sheet (28) according to the ninth embodiment differs from the illumination type key sheet (26) of the eighth embodiment in that it has no keytops (7) and is equipped, instead, with a surface sheet (29). Otherwise, this embodiment is of the same construction as the eighth embodiment.

The surface sheet (29) consists of a thin rubber sheet, and has, on the surface constituting the operating surface, annular ribs (30) surrounding the depressing operation portions. On the back surface opposed to the composite sheet (27), display elements, such as characters and figures, are formed by printing.

Like the illumination type key sheet (26) of the eighth embodiment, the illumination type key sheet (28) of the ninth embodiment can make the EL elements (27a) relatively free from generation of unevenness in luminance, prevent malfunction and failure of the semiconductor devices (11), realize a long-life illumination, allow input operation with small depression load, and provide waterproofness. Further, it provides the following effects.

In the illumination type key sheet (28), in which the surface sheet (29) is used for the depressing operation portions, the depressing operation portions are thin, making it possible to achieve a reduction in thickness.

Since the surface sheet (29) consists of a single sheet, the display elements can be formed without involving any blanks even when there are a plurality of depressing operation portions. Further, the assembly is facilitated, and the number of components can be reduced.

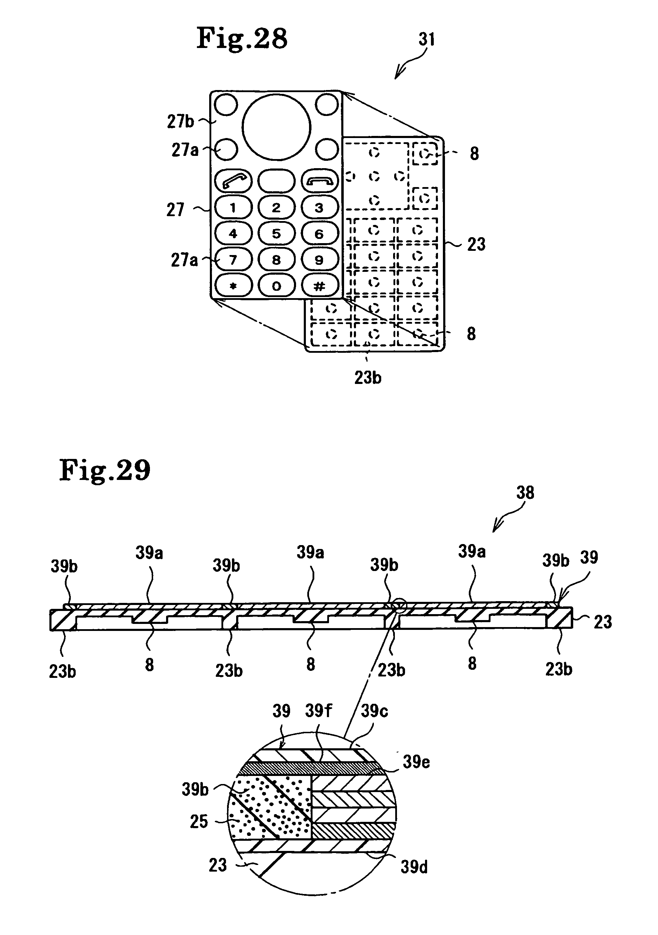

Tenth Embodiment (Figs. 27 and 28): An illumination type key sheet (31) according to the tenth embodiment differs from the illumination type key sheet (28) of the ninth embodiment in the absence of the surface sheet (29) and in the construction of the composite sheet (27). Otherwise, this embodiment is of the same construction as the ninth embodiment.

In the composite sheet (27), a display layer (27f) is provided between a surface film (27c) and a transparent electrode (27e), and the surface film (27c) constitute the depressing operation portions.

Like the illumination type key sheet (28) of the ninth embodiment, the illumination type key sheet (31) of the tenth embodiment can make the EL elements (27a) relatively free from generation of unevenness in luminance, prevent malfunction and failure of the semiconductor devices (11), realize a long-life illumination, allow input operation with small depression load, and provide waterproofness. Further, it provides the following effects.

In the illumination type key sheet (31), there is no need to prepare separate members as the depressing operation portions, whereby it is possible to reduce the number of components and achieve a reduction in thickness.

Since the display layer (27f) is provided on the back surface of the surface film (27c), it is possible to prevent the display layer (27f) from being worn to be chipped or erased as a result of being rubbed at the time of depressing operation.

First Modification of the Tenth Embodiment (Fig. 29): While in the above-mentioned illumination type key sheet (31) of the tenth embodiment the composite sheet (27) is formed by the EL elements (27a) as the EL members and the graphite sheet (27b) as the heat conductive member, an illumination type key sheet (38) according to the first modification of the tenth embodiment may be equipped with a composite sheet (39) formed by EL elements (39a), and a rubber sheet (39b) serving as the heat conductive member and consisting of a rubber-like elastic member in which the heat conductive filler (25) is dispersed. The composite sheet (39) has its upper surface covered with a surface film (39c) and its lower surface covered with a back surface film (39d), and a display layer (39f) is provided between the surface film (39c) and a transparent electrode (39e), with the surface film (39c) constituting the depressing operation portions.

Like the illumination type key sheet (31), the first modification of the tenth embodiment can make the EL elements (39a) relatively free from generation of unevenness in luminance, prevent malfunction and failure of the semiconductor devices (11), realize a long-life illumination, allow input operation with small depression load, provide waterproofness, achieve a reduction in the number of components, realize a reduction in thickness, and prevent wear and partial erasure of the display layer (39f).

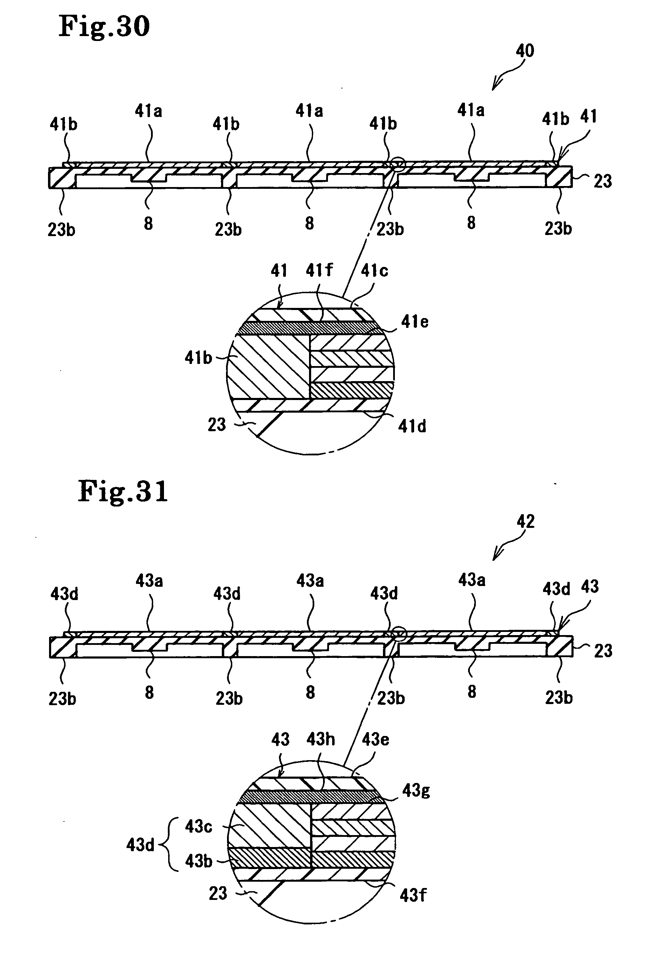

Second Modification of the Tenth Embodiment (Fig. 30): While in the above-mentioned illumination type key sheet (31) of the tenth embodiment the composite sheet (27) is formed by the EL elements (27a) as the EL members and the graphite sheet (27b) as the heat conductive member, an illumination type key sheet (40) according to the second modification of the tenth embodiment may be equipped with a composite sheet (41) formed by EL elements (41 a) and a rubber sheet (41 b) serving as the heat conductive member. The composite sheet (41) has its upper surface covered with a surface film (41c) and its lower surface covered with a back surface film (41d), and a display layer (41f) is provided between the surface film (41e) and a transparent electrode (41 c), with the surface film (41e) constituting the depressing operation portions.

Like the illumination type key sheet (31), the second modification of the tenth embodiment can make the EL elements (41 a) relatively free from generation of unevenness in luminance, prevent malfunction and failure of the semiconductor devices (11), realize a long-life illumination, allow input operation with small depression load, provide waterproofness, achieve a reduction in the number of components, realize a reduction in thickness, and prevent wear and partial erasure of the display layer (41f).

Third Modification of the Tenth Embodiment (Fig. 31): While in the above-mentioned illumination type key sheet (31) of the tenth embodiment the composite sheet (27) is formed by the EL elements (27a) as the EL members and the graphite sheet (27b) as the heat conductive member, an illumination type key sheet (42) according to the third modification of the tenth embodiment may be equipped with a composite sheet (43) formed by EL elements (43a) and a double-layered laminate sheet (43d) serving as the heat conductive member and formed by stacking together a thin metal plate (43b) and a graphite sheet (43c). The composite sheet (43) has its upper surface covered with a surface film (43e) and its lower surface covered with a back surface film (43f), and a display layer (43h) is provided between the surface film (43e) and a transparent electrode (43g), with the surface film (43e) constituting the depressing operation portions.

Like the illumination type key sheet (31), the third modification of the tenth embodiment can make the EL elements (43a) relatively free from generation of unevenness in luminance, prevent malfunction and failure of the semiconductor devices (11), realize a long-life illumination, allow input operation with small depression load, provide waterproofness, achieve a reduction in the number of components, realize a reduction in thickness, and prevent wear and partial erasure of the display layer (43f).

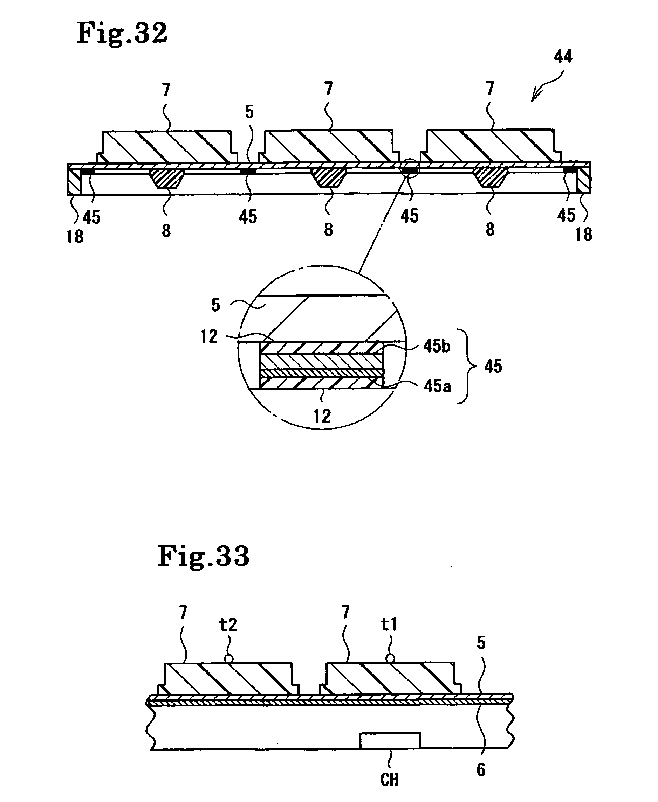

Eleventh Embodiment (Fig. 32): An illumination type key sheet (44) according to the eleventh embodiment differs from the illumination type key sheet (17) of the fourth embodiment in that it is provided with a laminate sheet (45) as the "heat diffusion member". Otherwise, this embodiment is of the same construction as the fourth embodiment.

The laminate sheet (45) has a double-layered structure formed by stacking together a thin metal plate (45a) and a graphite sheet (45b); the thin metal plate (45a) is on the front surface side, and the polymer protective layer (12) is provided on the surface of the graphite sheet (45b) opposed to the board. The thin metal plate (45a) can make the graphite sheet (45b) relatively free from breakage and chipping.

Like the illumination type key sheet (17) of the fourth embodiment, the illumination type key sheet (44) of the eleventh embodiment can make the EL sheet (5) relatively free from generation of unevenness in luminance, prevent malfunction and failure of the semiconductor devices (11), perfectly prevent detachment of an end portion of the graphite sheet (45b), and realize a long-life illumination.

### EXAMPLES

Next, the present invention will be described in more detail with reference to examples and an comparative example, which should not be construed restrictively.

1. Production of the Key Sheet

Example 1: Polyethylene terephthalate films having a thickness of 0.05 mm were used as the surface film (5d) and the back surface film (5i). The formation of layers was conducted by printing as follows. The transparent electrode (5e) was formed by using a transparent conductive ink (Orgacon P3000, manufactured by Agfa-Gevaert Group.); the light emitting layer (5f) was formed by using a bluish green phosphor paste (7151, manufactured by DuPont); the dielectric layer (5g) was formed by using a dielectric paste (7148, manufactured by DuPont); and the back surface electrode (5h) and the compensation electrode (5k) were formed by using a silver electrode paste (7145, manufactured by DuPont), thereby forming an inorganic dispersion type EL sheet (5) in a thickness of 0.13 mm and 10 cm square. The inorganic dispersion type EL sheet (5) was of a type which emits light from the entire surface thereof. A graphite sheet (6) of a thickness of 0.13 mm and 10 cm square (heat conductivity in the thickness direction: 7 W/m·K; heat conductivity in the surface direction: 240 W/m·K; manufactured by GraphTech International Ltd.) was closely attached to the back surface film (5i) side of the inorganic dispersion type EL sheet (5) by an adhesive tape. Then, two polycarbonate resin keytops (7) formed by injection molding and having a thickness of 1 mm and a diameter of 10 mm were prepared and fixed to the surface of the surface film (5d) of the inorganic dispersion type EL sheet (5) by an ultraviolet curing type adhesive (TB3018, manufactured by Three Bond Co., Ltd.) so as to be spaced apart from each other by 3 cm, thus producing an illumination type key sheet according to Example 1.

Example 2: A film (OTEC-120, manufactured by Oji Tobi Co., Ltd.) formed by evaporation of ITO was used as the surface film (5d), and a polyethylene terephthalate film having a thickness of 0.05 mm was used as the back surface film (5i). The formation of layers was conducted by printing as follow. The light emitting layer (5f) was formed by using a bluish green phosphor paste (7151, manufactured by DuPont); the dielectric layer (5g) was formed by using a dielectric paste (7148, manufactured by DuPont); and the back surface electrode (5h) and the compensation electrode (5k) were formed by using a silver electrode paste (7145, manufactured by DuPont), thereby forming an EL sheet (5) in a thickness of 0.12 mm and 10 cm square. Two light emitting portions (5a) having a diameter of 10 mm were formed on the EL sheet (5) so as to be spaced apart from each other by 3 cm. Through-holes corresponding to the light emitting portions (5a) and having a diameter of 12 mm were provided in a graphite sheet (6) of a thickness of 0.13 mm and 10 cm square (heat conductivity in the thickness direction: 7 W/m·K; heat conductivity in the surface direction: 240 W/m·K; manufactured by Graphtech Corporation), and the graphite sheet (6) was closely attached to the back surface film (5i) side of the EL sheet (5) by an adhesive tape. Then, two polycarbonate resin keytops (7) formed by injection molding and having a thickness of 1 mm and a diameter of 10 mm were prepared and fixed to the surface of the surface film (5d) by an ultraviolet curing type adhesive (TB3018, manufactured by Three Bond Co., Ltd.) so as to be in correspondence with the light emitting portions (5a) of the EL sheet (5), thus producing an illumination type key sheet according to Example 2.

Example 3: A base sheet (21) of a thickness of 0.4 mm and 10 cm square which was formed of silicone rubber (SH841 U, manufactured by Dow Coning Toray Co., Ltd.) and which was provided with pusher portions (8) corresponding to the light emitting portions (5a) was fixed to the graphite sheet (6) side of the illumination type key sheet of Example 2 by a silicone adhesive (KE24, manufactured by Shin-Etsu Chemical Co., Ltd), thereby producing the illumination type key sheet of Example 3.

Comparative Example 1: The illumination type sheet of Comparative Example 1 was produced by the same process as that of Example 2 except that no graphite sheet was used.

2. Evaluation of the Key Sheets (FIG. 33)

The illumination type key sheets were measured and evaluated for heat diffusion property and luminance. Table 1 shows the measurement results.

"Heat diffusion property": As a heat source simulating the semiconductor device generating heat, a ceramic heater (CH) ("Microceramic Heater MS-3" (trade name) with a heat generating portions having a size of 10 mm x 10 mm, manufactured by SAKAGUCHI E.H VOC CORP.) was used, and an illumination type key sheet was arranged over the ceramic heater such that one keytop (7) thereof was situated right above the heat generating portion at a position spaced apart therefrom by 0.6 mm. Then, electricity was supplied to the ceramic heater (CH) to generate heat in an amount of 1.4 W; the temperature of the key sheet after 10 minutes was measured by a thermometer. As shown in Fig. 33, the temperature measurement was conducted at two positions: the surface (t1) of the keytop (7) situated right above the ceramic heater (CH) and the surface (t2) of another keytop (7) spaced apart from that keytop (t1) by 3 cm. Further, the temperature of the illumination type key sheet after continuous illumination for 200 hours was also measured. Table 1 shows the respective temperatures at the points (t1) and (t2).

"Luminance": An EL element was caused to emit light, and the light guided to the surfaces of keytops (7) was measured by a luminance meter (LS-100, manufactured by KONICA MINOLTA HOLDINGS Inc.). The measurement was conducted on the keytop (7) (c1) situated right above the ceramic heater (CH) and another keytop (7) (c2) spaced apart therefrom by 3 cm. Further, as in the case of the temperature measurement, the luminance after continuous illumination for 200 hours was also measured. Table 1 shows the measurement values.

As shown in Table 1, the temperature at the point (t1) in the key top (7) of each Example are lower than the temperature at the point (t1) in Comparative Example 1, showing that there is no local heat storage.

As can be seen from Table 1, the luminance of the keytop (7) (c1) of each Example is higher than the luminance of the keytop (7) (c1) of Comparative Example 1, which indicates that no reduction in luminance is involved.

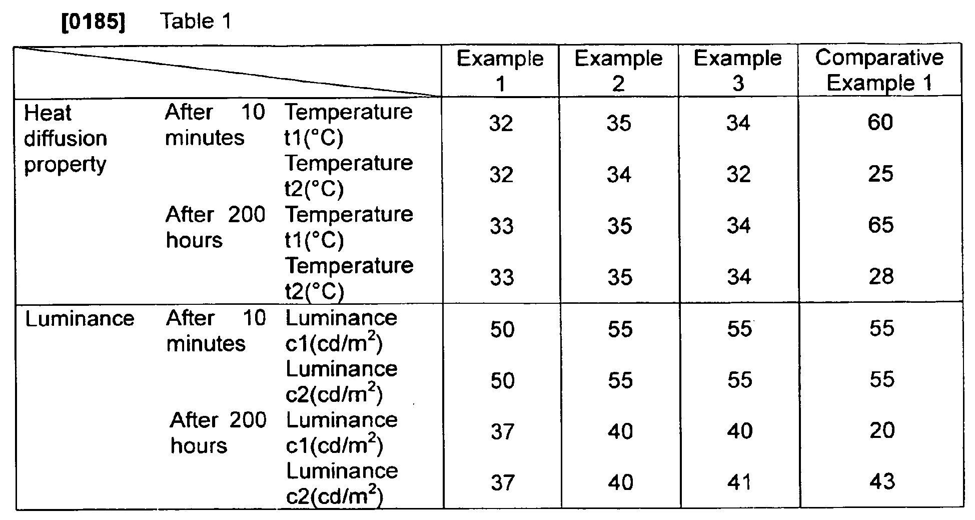

## Claims

1. An illumination type key sheet (3, 14, 16, 17, 20, 22, 24, 26, 28, 31, 32, 33, 35, 36, 38, 40, 42, 44, 46) comprising a depressing operation portion (7, 21, 27c, 29, 39c, 41c, 43e) which is arranged on a circuit board (4) on which an electronic component (11) generating heat is mounted, comprising:
an EL member for illuminating the depressing operation portion (7, 21, 27c, 29, 39c, 41 c, 43e); and
a sheet-like heat diffusion member (6, 13, 23, 27b, 34, 37, 39b, 41 b, 43d, 45) which promotes heat diffusion in a surface direction upon receiving heat generated by the electronic component (11), **characterized in that** a surface of the heat diffusion member is covered with a polymer protective layer (9,12).

2. The illumination type key sheet (3, 14, 16, 17, 20, 22, 24, 26, 28, 31, 32, 33, 35, 36, 38, 40, 42, 44, 46) according to claim 1, wherein the heat diffusion member (6, 13, 23, 34, 37, 45) is provided on a side of the EL member (5) opposed to the board.

3. The illumination type key sheet (16, 46) according to claim 1 or claim 2, further comprising through-holes (6a) extending in a thickness direction provided in portions of the heat diffusion member (6) corresponding to the depressing operation portions (7).

4. The illumination type key sheet (26, 28, 31, 38, 40, 42) according to claim 1, wherein the heat diffusion member (27b, 39b, 41b, 43d) and the EL member constitute a composite sheet (27).

5. The illumination type key sheet (14, 20, 22, 26, 28, 31, 33, 35, 36, 38, 40, 42, 46) according to any one of claims 1 to 4, further comprising an insulating base sheet (15, 21c, 23, 47) on a side of the heat diffusion member (6, 13, 27b, 34, 37, 39b, 41 b, 43d) opposed to the circuit board (4).

6. The illumination type key sheet (24, 33, 38) according to any one of claims 1 to 5, further comprising another heat diffusion member (23, 34, 39b) which is a rubber-like elastic member in which a heat conductive filler (25) is mixed.

7. The illumination type key sheet (22, 35, 40) according to any one of claims 1 to 5, wherein the heat diffusion member (13, 41 b) comprises a thin metal plate (13, 41 b) integrally provided on the EL member (5, 41 a).

8. An illumination type key sheet (3, 14, 16, 17, 20, 26, 28, 31, 32, 46) according to any one of claims 1 to 5, wherein the heat diffusion member (6, 27b) comprises a graphite sheet (6, 27b).

9. An illumination key sheet (36, 42, 44) according to any one of claims 1 to 5, wherein the heat diffusion member (37, 43d) comprises a laminate composed of a thin metal plate (37a, 43b) and a graphite sheet (37b, 43c).

10. The illumination type key sheet (24) according to any one of claims 1 to 9, wherein the depressing operation portion (7) is a keytop (7) formed of a translucent resin.

11. The illumination type key sheet (33) according to any one of claims 1 to 9, wherein the depressing operation portion (21) comprises a translucent surface sheet (21).

12. The illumination type key sheet (38) according to any one of claims 1 to 9, wherein:
the EL member (39a) is equipped with an EL element (39a) having at least a surface film (39c) constituting a light emission side; and
the depressing operation portion (39c) comprises the surface film (39c).

13. An illumination type key sheet (3, 14, 16, 17, 20, 22, 24, 26, 28, 31, 32, 33, 35, 36, 38, 40, 42, 44, 46) according to any one of claims 1 to 12, wherein the EL member (5, 27a, 39a, 41a, 43a) comprises an EL sheet (5) having a light emitting portion (5a) and a non-light-emitting portion (5b)

14. An illumination type key sheet (36, 42, 44) according to claim 9, wherein the heat diffusion member (37, 43d) comprises a laminate (37, 43d) in which the thin metal plate (37a, 43b) is situated on the circuit board (4) side.

15. An illumination type key sheet (33) according to claim 11, wherein the surface sheet (21) is composed of at least a base sheet (21 c) composed of a resin film and a keytop (21 a) composed of a resin film fixed to the base sheet (21 c).

16. An illumination type key sheet (33) according to claim 11, wherein the surface sheet (21) comprises is a resin film on which a display element, including a character, figure, symbol, and color, is formed by printing.

17. An illumination type key sheet (38) according to claim 12, wherein a display layer (39f) is provided on an inner surface of the surface film (39c).

18. An illumination type key sheet (3, 14, 16, 17, 20, 22, 24, 26, 28, 31, 32, 33, 35, 36, 38, 40, 42, 44, 46) according to claim 13, wherein:
the light emitting portion (5a) has an EL element (5c);
the EL element (5c) is formed by successively stacking together a surface film (5d), a transparent electrode (5e), a light emitting layer (5f), a dielectric layer (5g), a back surface electrode (5h), and a back surface film (5i); and
the non-light-emitting portion (5b) has an insulating resin (5m) between the surface film (5d) and the back surface film (5i).

19. An illumination type key sheet (3, 14, 16, 17, 20, 22, 24, 26, 28, 31, 32, 33, 35, 36, 38, 40, 42, 44, 46) according to claim 13, wherein:
the light emitting portion (5a) has an EL element (5c);
the EL element (5c) is formed by successively stacking together a surface film (5d), a transparent electrode (5e), a light emitting layer (5f), a dielectric layer (5g), a back surface electrode (5h), and a resist ink layer (5i); and
the non-light-emitting portion (5b) has between the surface film (5d) and the resist ink layer (5i).

## Patentansprüche

1. Beleuchtete Folientastatur (3, 14, 16, 17, 20, 22, 24, 26, 28, 31, 32, 33, 35, 36, 38, 40, 42, 44, 46), mit einem Drückbedienabschnitt (7, 21, 27c, 29, 39c, 41c, 43e), welcher auf einer Platine (4) angeordnet ist, auf welcher ein Wärme erzeugendes elektronisches Bauelement montiert ist, welche folgendes aufweist:
ein EL-Element zum Beleuchten des Drückbedienabschnitts (7, 21, 27c, 29, 39c, 41c, 43e); und
ein folienartiges Wärmeverteilelement (6, 13, 23, 27b, 34, 37, 39b, 41b, 43d, 45), welches die Wärmeverteilung in einer Oberflächenrichtung fördert, nachdem es von dem elektronischen Bauelement (11) erzeugte Wärme aufgenommen hat,
**dadurch gekennzeichnet, dass**
eine Oberfläche des Wärmeverteilelements mit einer Polymerschutzschicht (9, 12) abgedeckt ist.

2. Beleuchtete Folientastatur (3, 14, 16, 17, 20, 22, 24, 26, 28, 31, 32, 33, 35, 36 40, 42, 44, 46) nach Anspruch 1, wobei das Wärmeverteilelement (6, 13, 23, 34, 37, 45) auf einer Seite des EL-Elements (5) gegenüberliegend zu der Platine angeordnet ist.

3. Beleuchtete Folientastatur (16, 46) nach Anspruch 1 oder Anspruch 2, welche des weiteren sich in einer Dickenrichtung erstreckende Durchgangsbohrungen (6a) aufweist, die in Abschnitten des Wärmeverteilelements (6) angeordnet sind, die den Drückbedienabschnitten (7) entsprechen.

4. Beleuchtete Folientastatur (26, 28, 31, 38, 40, 42) nach Anspruch 1, wobei das Wärmeverteilelement (27b, 39b, 41b, 43d) und das EL-Element eine Verbundfolie (27) bilden.

5. Beleuchtete Folientastatur (14, 20, 22, 26, 28, 31, 33, 35, 36, 38, 40, 42, 46) nach einem der Ansprüche 1 bis 4, welche des weiteren eine isolierende Grundfolie (15, 21c, 23, 47) auf einer Seite des Wärmeverteilelements (6, 13, 27b, 34, 37, 39b, 41b, 43d) gegenüberliegend zu der Platine (4) aufweist.

6. Beleuchtete Folientastatur (24, 33, 38) nach einem der Ansprüche 1 bis 5, welche außerdem ein weiteres Wärmeverteilelement (23, 34, 39b) aufweist, welches als ein gummiartiges, elastisches Element ausgebildet ist, in welches ein Wärme leitender Füllstoff (25) vermischt ist.

7. Beleuchtete Folientastatur (22, 25, 40) nach einem der Ansprüche 1 bis 5, wobei das Wärmeverteilelement (13, 41b) eine dünne Metallplatte (13, 41b) aufweist, die integral auf dem EL-Element (5, 41a) vorgesehen ist.

8. Beleuchtete Folientastatur (3, 14, 16, 27, 20, 26, 28, 31, 32, 46) nach einem der Ansprüche 1 bis 5, wobei das Wärmeverteilelement (6, 27b) eine Graphitfolie (6, 27b) aufweist.

9. Beleuchtete Folientastatur (36, 42, 44) nach einem der Ansprüche 1 bis 5, wobei das Wärmeverteilelement (37, 43d) ein aus einer dünnen Metallplatte (37a, 43b) und einer Graphitfolie (37b, 43c) zusammengesetztes Laminat aufweist.

10. Beleuchtete Folientastatur (24) nach einem der Ansprüche 1 bis 9, wobei der Druckbedienabschnitt (7) eine aus einem lichtdurchlässigen Harz gebildete Tastenabdeckung (7) ist.

11. Beleuchtete Folientastatur (33) nach einem der Ansprüche 1 bis 9, wobei der Drückbedienabschnitt (21) eine lichtdurchlässige Oberflächenfolie (21) aufweist.

12. Beleuchtete Folientastatur (38) nach einem der Ansprüche 1 bis 9, wobei:
das EL-Element (39a) mit einem EL-Element (39a) versehen ist, welches wenigstens eine Oberflächenfolie (39c) aufweist, die eine Lichtemissionsseite bildet; und
der Drückbedienabschnitt (39c) die Oberflächenfolie (39c) aufweist.

13. Beleuchtete Folientastatur (3, 14, 16, 17, 20, 22, 24, 26, 28, 31, 32, 33, 35 ,36, 38, 40, 42, 44, 46) nach einem der Ansprüche 1 bis 12, wobei das EL-Element (5, 27a, 39a, 41a, 43a) eine EL-Folie (5) aufweist, welche einen Licht emittierenden Abschnitt (5a) und einen kein Licht emittierenden Abschnitt (5b) aufweist.

14. Beleuchtete Folientastatur (36, 42, 44) nach Anspruch 9, wobei das Wärmeverteilelement (37, 43d) ein Laminat (37, 43d) aufweist, in welchem die dünne Metallplatte (37a, 43b) auf der Seite der Platine (4) angeordnet ist.

15. Beleuchtete Folientastatur (33) nach Anspruch 11, wobei die Oberflächenfolie (21) aus wenigstens einer Basisfolie (21c) gebildet ist, die aus einer Harzfolie und einer Tastenabdeckung (21a) zusammengesetzt ist, welche eine Harzfolie aufweist, die an der Basisfolie (21c) angebracht ist.

16. Beleuchtete Folientastatur (33) nach Anspruch 11, wobei die Oberflächenfolie (21) eine Harzfolie aufweist, auf welcher ein Anzeigeelement einschließlich eines Buchstabens, einer Figur, eines Symbols und einer Farbe durch Drucken gebildet ist.

17. Beleuchtete Folientastatur (38) nach Anspruch 12, wobei eine Anzeigeschicht (39f) auf einer inneren Oberfläche der Oberflächenfolie (39c) vorgesehen ist.

18. Beleuchtete Folientastatur (3, 14, 16, 17, 20, 22, 24, 26, 28, 31, 32, 33, 35, 36, 38, 40, 42, 44, 46) nach Anspruch 13, wobei:
der Licht emittierende Abschnitt (5a) ein EL-Element (5c) aufweist;
das EL-Element (5c) durch aufeinanderfolgendes Aneinanderstapeln eines Oberflächenfilms (5d), einer transparenten Elektrode (5e), einer Licht emittierenden Schicht (5f), einer dielektrischen Schicht (5g), einer Rückflächenelektrode (5h) und einer Rückflächenfolie (5i) gebildet ist; und
der kein Licht emittierende Abschnitt (5b) ein isolierendes Harz (5m) zwischen der Oberflächenfolie (5d) und der Rückflächenfolie (5i) aufweist.

19. Beleuchtete Folientastatur (3, 14, 16, 17, 20, 22, 24, 26, 28, 31, 32, 33, 35, 36, 38, 40, 42, 44, 46) nach Anspruch 13, wobei:
der Licht emittierende Bereich (5a) ein EL-Element (5c) aufweist;
das EL-Element (5c) durch aufeinanderfolgendes Aneinanderstapeln eines Oberflächenfilms (5d), einer transparenten Elektrode (5e), einer Licht emittierenden Schicht (5f), einer dielektrischen Schicht (5g), einer Rückflächenelektrode (5h) und einer Resist-Tintenschicht (5i) gebildet ist; und
der kein Licht emittierende Abschnitt (5b) die Oberflächenfolie (5d) und die Resist-Tintenschicht (5i) aufweist.

## Revendications

1. Feuille de touche du type à éclairage (3, 14, 16, 17, 20, 22, 24, 26, 28, 31, 32, 33, 35, 36, 38, 40, 42, 44, 46) comprenant une partie de fonctionnement par pression (7, 21, 27c, 29, 39c, 41c, 43e) qui est agencée sur une carte de circuit imprimé (4) sur laquelle est montée un composant électronique (11) générant de la chaleur, comprenant :
un élément EL pour éclairer la partie de fonctionnement par pression (7, 21, 27c, 29, 39c, 41c, 43e) ; et
un élément de diffusion de la chaleur en forme de feuille (6, 13, 23, 27b, 34, 37, 39b, 41b, 43d, 45) qui favorise la diffusion de la chaleur dans une direction de surface lorsqu'il reçoit de la chaleur générée par le composant électronique (11), **caractérisée en ce que**
une surface de l'élément de diffusion de la chaleur est recouverte d'une couche protectrice polymère (9, 12).

2. Feuille de touche du type à éclairage (3, 14, 16, 17, 20, 22, 24, 26, 28, 31, 32, 33, 35, 36, 38, 40, 42, 44, 46) selon la revendication 1, dans laquelle l'élément de diffusion de la chaleur (6, 13, 23, 34, 37, 45) est placé sur un côté de l'élément EL (5) opposé au circuit.

3. Feuille de touche du type à éclairage (16, 46) selon la revendication 1 ou la revendication 2, comprenant en outre des trous traversants (6a) s'étendant dans une direction de l'épaisseur ménagés dans des parties de l'élément de diffusion de la chaleur (6) correspondant aux parties de fonctionnement par pression (7).

4. Feuille de touche du type à éclairage (26, 28, 31, 38, 40, 42) selon la revendication 1, dans laquelle l'élément de diffusion de la chaleur (27b, 39b, 41b, 43d) et l'élément EL forment une feuille composite (27).

5. Feuille de touche du type à éclairage (14, 20, 22, 26, 28, 31, 33, 35, 36, 38, 40, 42, 46) selon l'une quelconque des revendications 1 à 4, comprenant en outre une feuille de base isolante (15, 21c, 23, 47) sur un côté de l'élément de diffusion de la chaleur (6, 13, 27b, 34, 37, 39b, 41b, 43d) opposé à la carte de circuit imprimé (4).

6. Feuille de touche du type à éclairage (24, 33, 38) selon l'une quelconque des revendications 1 à 5, comprenant en outre un autre élément de diffusion de la chaleur (23, 34, 39b) qui est un élément élastique du type caoutchouc dans lequel est mélangée une charge conduisant la chaleur (25).

7. Feuille de touche du type à éclairage (22, 35, 40) selon l'une quelconque des revendications 1 à 5, dans laquelle l'élément de diffusion de la chaleur (13, 41b) comprend une fine plaque de métal (13, 41b) placée intégralement sur l'élément EL (5, 41a).

8. Feuille de touche du type à éclairage (3, 14, 16, 17, 20, 26, 28, 31, 32, 46) selon l'une quelconque des revendications 1 à 5, dans laquelle l'élément de diffusion de la chaleur (6, 27b) comprend une feuille de graphite (6, 27b).

9. Feuille de touche du type à éclairage (36, 42, 44) selon l'une quelconque des revendications 1 à 5, dans laquelle l'élément de diffusion de la chaleur (37, 43d) comprend un stratifié composé d'une fine plaque de métal (37a, 43b) et d'une feuille de graphite (37b, 43c).

10. Feuille de touche du type à éclairage (24) selon l'une quelconque des revendications 1 à 9, dans laquelle la partie de fonctionnement par pression (7) est un dessus de touche (7) fait en résine translucide.

11. Feuille de touche du type à éclairage (33) selon l'une quelconque des revendications 1 à 9, dans laquelle la partie de fonctionnement par pression (21) comprend une feuille de surface translucide (21).

12. Feuille de touche du type à éclairage (38) selon l'une quelconque des revendications 1 à 9, dans laquelle :
l'élément EL (39a) est équipé d'un élément EL (39a) comportant au moins une couche de surface (39c) formant un côté luminescent ; et
la partie de fonctionnement par pression (39c) comprend la couche de surface (39c).

13. Feuille de touche du type à éclairage (3, 14, 16, 17, 20, 22, 24, 26, 28, 31, 32, 33, 35, 36, 38, 40, 42, 44, 46) selon l'une quelconque des revendications 1 à 12, dans laquelle l'élément EL (5, 27a, 39a, 41a, 43a) comprend une feuille EL (5) comportant une partie luminescente (5a) et une partie non luminescente (5b).

14. Feuille de touche du type à éclairage (36, 42, 44) selon la revendication 9, dans laquelle l'élément de diffusion de la chaleur (37, 43d) comprend un stratifié (37, 43d) dans lequel la fine plaque de métal (37a, 43b) est située du côté de la carte de circuit imprimé (4).

15. Feuille de touche du type à éclairage (33) selon la revendication 11, dans laquelle la feuille de surface (21) est composée d'au moins une feuille de base (21c) composée d'une couche de résine et un dessus de touche (21a) composé d'une couche de résine fixée à la feuille de base (21c).

16. Feuille de touche du type à éclairage (33) selon la revendication 11, dans laquelle la feuille de surface (21) est une couche de résine sur laquelle un élément d'affichage, comprenant un caractère, un chiffre, un symbole et une couleur, est formé par impression.

17. Feuille de touche du type à éclairage (38) selon la revendication 12, dans laquelle une couche d'affichage (39f) est formée sur une surface intérieure de la couche de surface (39c).

18. Feuille de touche du type à éclairage (3, 14, 16, 17, 20, 22, 24, 26, 28, 31, 32, 33, 35, 36, 38, 40, 42, 44, 46) selon la revendication 13, dans laquelle :
la partie luminescente (5a) comporte un élément EL (5c) ;
l'élément EL (5c) est formé en empilant successivement une couche de surface (5d), une électrode transparente (5e), une couche luminescente (5f), une couche diélectrique (5g), une électrode de surface arrière (5h) et une couche de surface arrière (5i) ; et
la partie non luminescente (5b) comporte une résine isolante (5m) entre la couche de surface (5d) et la couche de surface arrière (5i).

19. Feuille de touche du type à éclairage (3, 14, 16, 17, 20, 22, 24, 26, 28, 31, 32, 33, 35, 36, 38, 40, 42, 44, 46) selon la revendication 13, dans laquelle :
la partie luminescente (5a) comporte un élément EL (5c) ;
l'élément EL (5c) est formé en empilant successivement une couche de surface (5d), une électrode transparente (5e), une couche luminescente (5f), une couche diélectrique (5g), une électrode de surface arrière (5h), et une couche d'encre résistante (5i) ; et
la partie non luminescente (5b) est formée de la couche de surface (5d) et de la couche d'encre résistante (5i.
